# EUROPEAN PATENT SPECIFICATION

(11) **EP 2 426 429 B1**
(45) Date of publication and mention of the grant of the patent: **26.10.2016**
(21) Application number: 10769522.3
(22) Date of filing: 28.04.2010
(51) Int. Cl.: F24F 1/00, F24F 3/16, B01D 46/00, B01D 46/10

(54) **INDOOR UNIT FOR AIR CONDITIONING DEVICE**
INNENEINHEIT FÜR EINE KLIMAANLAGENVORRICHTUNG
UNITÉ D'INTÉRIEUR POUR DISPOSITIF DE CONDITIONNEMENT D'AIR

(30) Priority: 30.04.2009 JP 2009110794
(43) Date of publication of application: 07.03.2012
(73) Proprietor: Daikin Industries, Ltd., Osaka-shi, Osaka 530-8323 (JP)
(72) Inventor: YUMOTO, Yoshiaki, Sakai-shi Osaka 591-8511 (JP); YAMAGATA, Kazuto, Sakai-shi Osaka 591-8511 (JP); YOKOMIZO, Tsuyoshi, Sakai-shi Osaka 591-8511 (JP)
(74) Representative: Hoffmann Eitle
(86) International application number: PCT/JP2010/003071
(87) International publication number: WO 2010/125822

(56) References cited:
- WO-A1-2008/142863
- JP-A- 2007 271 174
- JP-A- 2008 116 139
- JP-A- 2008 157 538
- JP-A- 2008 157 538

## Description

### TECHNICAL FIELD

The present invention relates to indoor units of air conditioners configured to remove dust captured on an air filter, and method of cleaning an air filter.

### BACKGROUND ART

Among indoor units of air conditioners each having an air filter at an air inlet, those provided with a dust removal brush for removing dust captured on the air filter have been known.

In the indoor units of this type, a disk-like air filter is rotated to come into contact with a dust removal brush, and the dust captured on the air filter is removed by the dust removal brush as disclosed in Patent Document 1. Further, in the structure of Patent Document 1, the dust removal brush is rotated while being in contact with a plate member which is located at a position opposite to the air filter relative to the dust removal brush so as to come in contact with the brush, and which scrapes off the dust adhering to the dust removal brush. Patent Document 2 describes a cleaning device of an air conditioner capable of easily removing dust attached to an air filter. The cleaning device consists of a dust removal body, which is rotatable around a shaft and a stationary counterpart which removes dust that is trapped in the cleaning section of the rotating dust removal body when the cleaning section is passed along its stationary counterpart. This results in dust being removed from that cleaning section and being collected in a dust box.

### CITATION LIST

### PATENT DOCUMENT

Patent Document 1: Japanese Patent Publication No. 2007-38215
Patent Document 2: JP 2008 157538 A.

### SUMMARY OF THE INVENTION

### TECHNICAL PROBLEM

However, in the case where the dust captured on the air filter is removed by the dust removal brush, and the dust adhering to the dust removal brush is removed using the plate member as in the above conventional indoor unit, it is difficult to completely remove the dust adhering to the dust removal brush even if the plate member is pushed against the dust removal brush, and much of the dust may remain in the dust removal brush. In other words, dust remains in the bristles of the brush even if the plate member is pushed against the dust removal brush. Thus, it is difficult to efficiently remove the dust using the plate member.

In view of this, a structure in which the dust caught in the dust removal brush is removed by a removal brush may be considered. The dust caught in the dust removal brush can be scarped off from the dust removal brush by the removal brush. Thus, it is possible to remove the dust adhering to the dust removal brush more reliably.

However, even if the removal brush is used to remove the dust adhering to the dust removal brush as mentioned above, the dust adhering to the removal brush is gathered at an edge of the brush portion by the removal brush, and separated from the dust removal brush. Thus, the dust gathers and adheres to the edge of the brush portion of the dust removal brush along the outer peripheral surface of the dust removal brush. In this state, the dust may stick to the dust removal brush, or may not be easily removed from the dust removal brush when the removed dust is accumulated or disposed of.

The present invention was made in view of the above problems, and it is an objective of the invention to provide a structure capable of separating, from a dust removal brush, as much dust as possible which gathers at an edge of a brush portion of the dust removal brush, in an indoor unit of an air conditioner in which dust adhering to an air filter is removed by a dust removal brush, and the dust adhering to the dust removal brush is removed by a removal brush.

### SOLUTION TO THE PROBLEM

To achieve the above objective, in an indoor unit (3) of an air conditioner (1) according to the present invention, a columnar body (51a) of a dust removal brush (51) which is rotatable and comes in contact with an a air filter (30) and a removal brush (52b) is configured to cover one of both edge portions of a brush portion (51b) in a direction of rotation of the brush portion (51b), the brush portion (51b) being provided on the outer peripheral surface of the columnar body (51a), and the one edge portion is located close to the removal brush (52b) when the dust removal brush (51) removes dust captured on the air filter (30).

Specifically, the first aspect of the present invention is intended for an indoor unit of an air conditioner which has in a casing (18, 101) an indoor heat exchanger (22), an indoor fan (21) for blowing air taken from a room to a room side, and an air filter (30) located on an intake side of the indoor fan (21).

The indoor unit includes: a dust removal brush (51) which includes a columnar body (51a) rotatable about an axis, and a brush portion (51b) provided on part of an outer peripheral surface of the body (51a) along a circumferential direction, the brush portion (51b) coming in contact with the air filter (30) to remove dust captured on the air filter (30), and a removal brush (52b) which is located to be in contact with the brush portion (51b) when the dust removal brush (51) is rotated, and which is configured to remove dust adhering to the brush portion (51b), wherein the body (51a) of the dust removal brush (51) is configured to cover at least one of both edge portions of the brush portion (51 b) in a direction of rotation of the dust removal brush (51), and a protrusion (51d) is provided on the outer peripheral surface of the body (51a), the protrusion (51d) covering one of the edge portions of the brush portion (51b) in the direction of rotation of the dust removal brush (51), the one edge portion being located close to the removal brush (52b) when the brush portion (51b) removes the dust on the air filter (30).

With this structure, the dust captured on the air filter (30) can be removed by the brush portion (51b) of the dust removal brush (51). Also, the dust adhering to the brush portion (51b) can be removed by rotating the dust removal brush (51) about an axis of the columnar body (51a), and bringing the brush portion (51b) to come in contact with the removal brush (52b).

Here, when the dust adhering to the brush portion (51b) is removed by the removal brush (52b), some types of dust may not be easily separated from the brush portion (51b), and gather like a band at the edge portion of the brush portion (51b). In view of this, the body (51a) of the dust removal brush (51) is configured to cover at least one of both edge portions of the brush portion (51b) in a direction of rotation of the dust removal brush (51), thereby making it possible to separate the dust adhering to the edge portion of the brush portion (51b) from the dust removal brush (51). In other words, if the edge portion of the brush portion (51b) is exposed, dust gathers at the edge portion along the outer peripheral surface of the body (51a), and therefore, the dust sticks to the body (51a), or is not easily removed from the body (51a). However, with the structure described above, it is possible to prevent the situation where the dust sticks to the body (51a), or is not easily removed from the body (51 a).

In particular, in the above structure, it is preferable that the body (51a) is configured to cover one of the edge portions of the brush portion (51b) in the direction of rotation of the dust removal brush (51), the one edge portion being located close to the removal brush (52b) when the brush portion (51 b) removes the dust on the air filter (30) (the second aspect of the present invention).

In the structure in which dust adhering to the brush portion (51 b) is removed by the removal brush (52b) and falls into the side opposite to the air filter (30), the dust is scraped off from one of both edge portions of the brush portion (51 b) in a rotational direction which is located closer to the removal brush (52b) than the other edge portion when the brush portion (51b) removes the dust on the air filter (30). Thus, the dust easily gathers like a band at the edge portion. Therefore, if the body (51a) is configured to cover the edge portion, it is possible to obtain the effect as described in the first aspect of the present invention more reliably.

In this structure, one of both edge portions of the brush portion (51 b) in the rotational direction which is located closer to the removal brush (52b) than the other edge portion when the brush portion (51b) removes the dust on the air filter (30), is covered by the protrusion (51 d). Thus, the dust which extends like a band from the edge portion can be separated from the dust removal brush (51). Moreover, the protrusion (51d) covering the edge portion of the brush portion (51b) can scrape off the dust adhering to the removal brush (52b) when the protrusion (51d) comes in contact with the removal brush (52b).

In particular, it is preferable that a protrusion end of the protrusion (51 d) is located outside a bristle end of the brush portion (51b) relative to the body (51 a) (the third aspect of the present invention). In this structure, the edge portion of the brush portion (51b) of the dust removal brush (51) is more reliably covered by the protrusion (51d) provided on the body (51 a) of the dust removal brush (51), and the dust which extends like a band from the edge portion is more reliably separated from the dust removal brush (51) by the protrusion (51d). Thus, with this structure described above, dust can be more reliably separated from the removal brush (51).

Further, it is preferable that a side surface of the protrusion (51 d) facing the brush portion (51b) is tilted to the brush portion (51b) with decreasing distance from a protrusion end of the protrusion (51d) (the fourth aspect of the present invention). With this structure, the bristle end of the brush portion (51b) can be in close contact with the protrusion (51d) provided on the body (51a) of the dust removal brush (51). Thus, it is possible to prevent a space between the brush portion (51b) and the protrusion (51d). As a result, the dust gathering at the edge portion of the brush portion (51b) is elongated away from the dust removal brush (51) by the protrusion (51d).

Further, it is preferable that the indoor unit includes a dust case (60) configured to accommodate the dust removal brush (51) and the removal brush (52b), wherein a fixed-side protrusion (52d) is provided in the dust case (60), the fixed-side protrusion (52d) being located opposite to the air filter (30) relative to the removal brush (52b), and protruding close to a locus of a protrusion end of the protrusion (51 d) when the dust removal brush (51) is rotated (the fifth aspect of the present invention).

In this structure, in removing the dust adhering to the dust removal brush (51) by the removal brush (52b), even if dust gathers like a band at one of edge portions of the brush portion (51b) of the dust removal brush (51) which is located closer to the removal brush (52b) when the brush portion (51b) removes the dust on the air filter (30), the dust can be separated from the dust removal brush (51) by the protrusion (51d) of the body (51a) provided at the edge portion, and squeezed between the protrusion (51d) and the fixed-side protrusion (52d) provided on the dust case (60). By squeezing the dust between the protrusion (51 d) on the dust removal brush (51) and the fixed-side protrusion (52d) on the dust case (60), the dust can be compressed in a thickness direction, and elongated in a longitudinal direction of the band-like dust. As a result, the volume of the dust is reduced, and more dust can be stored in the dust case (60). Further, since the dust can be easily pulled apart at a portion where the dust is squeezed between the protrusion (51d) and the fixed-side protrusion (52d), the dust can be easily transferred.

Further, it is preferable that when viewed from an axis direction of the body (51a), a base portion of the fixed-side protrusion (52d) on a removal brush (52b) side is closer to the removal brush (52b) than a protrusion end of the fixed-side protrusion (52d) (the sixth aspect of the present invention).

With this structure, the movement of the dust gathering at one of the edge portions of the brush portion (51b) of the dust removal brush (51) which is located closer to the removal brush (52b) when the brush portion (51b) removes the dust on the air filter (30), is not significantly inhibited by the fixed-side protrusion (52d) in the dust case (60) when the dust moves simultaneously with the rotation of the dust removal brush (51). Here, if the protrusion end of the fixed-side protrusion (52d) is located closer to the removal brush (52b) than the base portion of the fixed-side protrusion (52d) on the removal brush (52b) side when viewed from an axis direction of the body (51a), the dust is caught by the fixed-side protrusion (52d), and is accumulated on the removal brush (52b) side of the fixed-side protrusion (52d). On the contrary, in the structure in which the base portion of the fixed-side protrusion (52d) on the removal brush (52b) side is closer to the removal brush (52b) than the protrusion end of the fixed-side protrusion (52d) as described above, the dust does not accumulated on the removal brush (52b) side of the fixed-side protrusion (52d), and passes through the space between the fixed-side protrusion (52d) and the protrusion (51d) of the dust removal brush (51).

Moreover, in this structure, if the dust removal brush (51) has a circular cross section, the base portion of the fixed-side protrusion (52d) on the removal brush (52b) side is located radially outward of a line parallel to a tangent of the dust removal brush (51). Thus, a space is created around the base portion. The dust adhering to the brush portion (51 b) of the dust removal brush (51) is rolled and increases in size in the above space during the rotation of the dust removal brush (51), and thereafter, the dust is squeezed between the fixed-side protrusion (52d) and the protrusion (51d) to be stored as a chunk of dust having a certain degree of size.

Further, it is preferable that when viewed from an axis direction of the body (51 a), a base portion of the fixed-side protrusion (52d) opposite to the removal brush (52b) is farther from the removal brush (52b) than a protrusion end of the fixed-side protrusion (52d) (the seventh aspect of the present invention).

In this structure, even if the protrusion (51 d) of the dust removal brush (51) comes in contact with the fixed-side protrusion (52d) on the dust case (60) during the rotation of the dust removal brush (51) from a contact position with the removal brush (52b) to a contact position with the air filter (30), the protrusion (51d) can pass over the fixed-side protrusion (52d) without being stopped by the fixed-side protrusion (52d). Thus, the rotation of the dust removal brush (51) is not inhibited in the above structure.

Further, it is preferable that the dust case (60) is provided with an opening (63) in which the dust removal brush (51) is positioned, and with a supporting member (52a) to a surface of which the removal brush (52b) is attached, and which is elastically supported in the opening (63) to make the removal brush (52b) biased to the dust removal brush (51), and the fixed-side protrusion (52d) is preferably provided on the same side as the removal brush (52b) of the supporting member (52a) (the eighth aspect of the present invention).

In this structure, the removal brush (52b) is located on the supporting member (52a) elastically supported in the opening (63) of the dust case (60), and the removal brush (52b) is biased to the dust removal brush (51). Thus, the dust removal brush (51) can be brought into contact with the removal brush (52b) more firmly, which results in removing the dust adhering to the dust removal brush (51) by the removal brush (52b) more reliably. Moreover, since the fixed-side protrusion (52d) is provided on the supporting member (52a), the supporting member (52a) having the fixed-side protrusion (52d) is displaced even if the protrusion (51 d) of the dust removal brush (51) meets the fixed-side protrusion (52d). Therefore, it is possible to prevent the protrusion (51 d) from interfering with the fixed-side protrusion (52d) and being damaged by the fixed-side protrusion (52d), and rotation of the dust removal brush (51) is not inhibited.

Further, it is preferable that the indoor unit includes a dust collecting box (90) configured to collect dust in the dust case (60), and a dust transfer mechanism (80) configured to transfer the dust in the dust case (60) to the dust collecting box (90) by causing airflow into the dust case (60) (the tenth aspect of the present invention). In this structure, the dust removed from the air filter (30) can be collected in the dust collecting box (90), and thus, it is possible to reduce the frequencies of collecting the dust from the indoor unit (3). Further, in the structure having a dust transfer mechanism (80) for transferring dust to the dust collecting box (90), the band-like dust can be pulled apart as described above by using the structure in the sixth aspect of the present invention, and the dust can be efficiently transferred by airflow. (with aspect of the present invention).

In the structure in which airflow is used to transfer dust as described above, it is preferable in particular that a sealing member (45) configured to seal a gap between the dust case (60) and the dust removal brush (51) is provided in the dust case (60) opposite to the removal brush (52b) relative to the dust removal brush (51) (tenth aspect of the present invention).

In this structure, it is possible to prevent air from flowing between the dust case (60) and the dust removal brush (51), and prevent the dust from flowing out from the opening (63) in the dust case (60). The side opposite to the removal brush (52b) relative to the dust removal brush (51) refers to a side area separated by a central line of a cross section of the dust removal brush (51) in which the removal brush (52b) is not included.

Further, it is preferable that bristles of the dust removal brush (51) and the removal brush (52b) extend toward an interior of the dust case (60) when the dust removal brush (51) and the removal brush (52b) are in contact with each other (the eleventh aspect of the present invention).

In this structure, the dust adhering to the dust removal brush (51) falls into the dust case (60) when it is scraped off by the removal brush (52b). Thus, the dust can be efficiently collected in the dust case (60).

Further, in a method of cleaning an air filter of an indoor unit of an air conditioner with the structure in which bristles of the brush are positioned as described above, it is preferable that dust adhering to the brush portion (51b) adheres to the removal brush (52b) when the dust removal brush (51) rotated from a position where the brush portion (51b) comes in contact with the air filter (30) to a position where the brush portion (51 b) comes in contact with the removal brush (52b) returns to the position where the brush portion (51 b) comes in contact with the air filter (30), and the dust adhering to the removal brush (52b) is scraped off during another rotation of the dust removal brush (51) to the position where the brush portion (51b) comes in contact with the removal brush (52b).

In this method in which the dust adhering to the dust removal brush (51) adheres to the removal brush (52b), and the dust adhering to the removal brush (52b) is scraped off by the dust removal brush (51) by the rotation of the dust removal brush (51), the dust gathers like a band at one of edge portions of the brush portion (51b) of the dust removal brush (51) which is located closer to the removal brush (52b) when the brush portion (51b) removes the dust from the air filter (30). In such a structure, the similar effects as described in the first to eleventh aspects of the present invention can be obtained by using the structures described in the first to eleventh aspects of the present invention.

### ADVANTAGES OF THE INVENTION

As described above, in the indoor unit (3) of the air conditioner (1) according to the present invention, the body (51a) of the dust removal brush (51) for removing the dust captured on the air filter (30) is configured to cover at least one of both edge portions of the brush portion (51b) in a direction of rotation of the dust removal brush (51). Thus, the dust which gathers like a band at the edge portion can be separated from the dust removal brush (51). With this structure, it is possible to prevent the situation where dust sticks to the dust removal brush (51), or the dust cannot be easily removed from the dust removal brush (51) when the dust is collected or transferred. In particular, according to the second aspect of the present invention, the body (51a) is configured to cover one of edge portions of the brush portion (51) which is located closer to the removal brush (52b) when the brush portion (51b) removes the dust on the air filter (30), in the structure in which dust is scraped off into the space opposite to the air filter (30). In this structure, the dust can be separated from the dust removal brush (51) more reliably.

According to the present invention, a protrusion (51d) which covers the edge portion of the brush portion (51 b) is provided on the outer peripheral surface of the body (51a). Thus, the dust can be separated from the dust removal brush (51) more reliably, and the dust adhering to the removal brush (52b) can be scraped off by the protrusion (51d).

According to the third aspect of the present invention, a protrusion end of the protrusion (51d) is located outside a bristle end of the brush portion (51b) relative to the body (51 a). Thus, the dust can be separated from the dust removal brush (51) more reliably, and the dust adhering to the removal brush (52b) can be scraped off by the protrusion (51d).

According to the fourth aspect of the present invention, a side surface of the protrusion (51d) facing the brush portion (51b) is tilted to the brush portion (51b) with decreasing distance from a protrusion end of the protrusion (51 d). Thus, the bristle end of the brush portion (51b) at the edge portion can be in close contact with the protrusion (51 d) more reliably, and it is possible to prevent dust from accumulating between the protrusion (51d) and the brush portion (51 b) more reliably. Accordingly, with this structure, the dust can be separated from the dust removal brush (51) more reliably.

According to the fifth aspect of the present invention, a fixed-side protrusion (52d) protruding close to a locus of a protrusion end of the protrusion (51 d) when the dust removal brush (51) is rotated, is provided opposite to the air filter (30) relative to the removal brush (52b) in the dust case (60). Thus, the dust can be squeezed and compressed between the protrusion (51d) and the fixed-side protrusion (52d), and can be elongated in a longitudinal direction while being compressed in a thickness direction. As a result, the dust can be stored efficiently. Further, the dust can be transferred easily in the case where the dust is transferred using airflow.

According to the sixth aspect of the present invention, a base portion of the fixed-side protrusion (52d) on the removal brush (52b) side is closer to the removal brush (52b) than the protrusion end of the fixed-side protrusion (52d). Thus, it is possible to prevent the situation where the dust is caught by the fixed-side protrusion (52d), and is accumulated in the space on the removal brush (52b) side of the fixed-side protrusion (52d).

According to the seventh aspect of the present invention, a base portion of the fixed-side protrusion (52d) opposite to the removal brush (52b) is farther from the removal brush (52b) than the protrusion end of the fixed-side protrusion (52d). Thus, it is possible to prevent interference of the protrusion (51d) of the dust removal brush (51) with the fixed-side protrusion (52d), and rotation of the dust removal brush (51) is not inhibited when the dust removal brush (51) is rotated back to the position in contact with the air filter (30).

According to the eighth aspect of the present invention, the removal brush (52b) is attached to the supporting member (52a) which is elastically supported in the opening (63) of the dust case (60), and the fixed-side protrusion (52d) is provided on the same side of the supporting member (52a). Thus, the removal brush (52b) can be pushed against the dust removal brush (51) more firmly. Further, even if the protrusion (51 d) of the dust removal brush (51) comes in contact with the fixed-side protrusion (52d) on the supporting member (52a), rotation of the dust removal brush (51) is not inhibited.

According to the ninth aspect of the present invention in which dust in the dust case (60) is transferred into the dust collecting box (90) by causing airflow, the band-like dust can be pulled apart by using the structure in the sixth aspect of the present invention. Therefore, the dust can be efficiently transferred. In particular, according to the tenth aspect of the present invention, a sealing member (45) configured to seal a gap between the dust case (60) and the dust removal brush (51) is provided in the dust case (60) opposite to the removal brush (52b) relative to the dust removal brush (51). Thus, it is possible to prevent the dust from flowing out from the gap between the dust removal brush (51) and the dust case (60) together with air.

According to the eleventh aspect of the present invention, bristles of the dust removal brush (51) and the removal brush (52b) extend toward an interior of the dust case (60) when the dust removal brush (51) and the removal brush (52b) are in contact with each other. Thus, the dust can be efficiently collected in the dust case (60). In particular, according to method of the present invention in which the dust adhering to the dust removal brush (51) adheres to the removal brush (52b), and the dust is scraped off from the removal brush (52b) by the dust removal brush (51) by the rotation of the dust removal brush (51), the similar effects as in the first to eleventh aspects of the present invention can be obtained by using the structures described in the first to eleventh aspects of the present invention.

### BRIEF DESCRIPTION OF THE DRAWINGS

[FIG. 1] FIG. 1 shows a pipeline for illustrating a structure of an air conditioner having an indoor unit according to the present invention.
[FIG. 2] FIG. 2 is a vertical cross section for illustrating a structure inside the indoor unit.
[FIG. 3] FIG. 3 is an oblique view of an indoor unit viewed from the room side.
[FIG. 4] FIG. 4 is a cross section taken along the line IV-IV in FIG. 2.
[FIG. 5] FIG. 5 is an oblique view for illustrating structures of an air vent in a partition plate, an air filter, and a dust storage container.
[FIG. 6] FIG. 6 is a cross section for illustrating an attachment structure of the air filter.
[FIG. 7] FIG. 7 is an oblique view for illustrating a structure of a filter drive section.
[FIG. 8] FIG. 8 shows a dust removal mechanism and a dust storage container viewed obliquely from above.
[FIG. 9] FIG. 9 shows a dust storage container viewed obliquely from below.
[FIG. 10] FIG. 10 is a cross section taken along the line X-X in FIG. 8.
[FIG. 11] FIG. 11 is an enlarged cross section of an introduction duct.
[FIG. 12] FIG. 12 shows cross sections for illustrating a movement of a damper of the dust transfer mechanism.
[FIG. 13] FIG. 13 schematically illustrates a relationship between an air filter and a dust removal mechanism. FIG. 13(A) shows the state during a normal operation, and FIG. 13(B) and FIG. 13(C) show the state during a filter cleaning operation.
[FIG. 14] FIG. 14 shows a movement of a dust removal mechanism during a dust removal operation, at a cross section taken along the line XIV-XIV in FIG. 8.
[FIG. 15] FIG. 15 shows a movement of a dust removal mechanism during a brush cleaning operation.

### DESCRIPTION OF EMBODIMENTS

Embodiments of the present invention will be described in detail below based on the drawings. The foregoing embodiments are merely preferred examples in nature, and are not intended to limit the scope of the claims.

The embodiment relates to an air conditioner (1) having an indoor unit (3) according to the present invention. In this air conditioner (1), the indoor unit (3) is mounted on a ceiling in the indoor space. In the following descriptions, a structure of the air conditioner (1) according to the present embodiment will be described first, and a structure of the indoor unit (3) will be described thereafter.

### <General Structure>

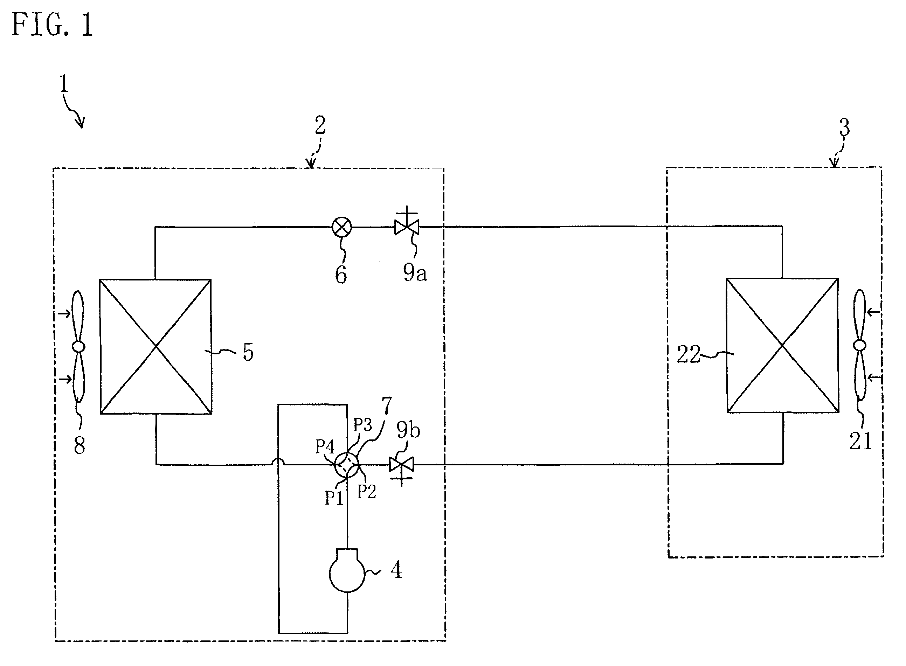

As shown in FIG. 1, the air conditioner (1) includes an outdoor unit (2) and an indoor unit (3). A compressor (4), an outdoor heat exchanger (5), an expansion valve (6), a four-way switching valve (7), and an outdoor fan (8) are provided in the outdoor unit (2). An indoor heat exchanger (22) and an indoor fan (21) are provided in the indoor unit (3).

In the outdoor unit (2), the discharge side of the compressor (4) is connected to a first port (P1) of the four-way switching valve (7). The intake side of the compressor (4) is connected to a third port (P3) of the four-way switching valve (7).

The outdoor heat exchanger (5) is a fin-and-tube heat exchanger of cross-fin type. One end of the outdoor heat exchanger (5) is connected to a fourth port (P4) of the four-way switching valve (7). The other end of the outdoor heat exchanger (5) is connected to a liquid side closing valve (9a).

The outdoor fan (8) is located in the vicinity of the outdoor heat exchanger (5). The outdoor heat exchanger (5) exchanges heat between the outside air taken by the outdoor fan (8) and a refrigerant flowing in the heat exchanger (5). An expansion valve (6) whose degree of opening is variable is provided between the outdoor heat exchanger (5) and the liquid side closing valve (9a). Further, a second port (P2) of the four-way switching valve (7) is connected to a gas side closing valve (9b).

The four-way switching valve (7) is capable of switching between a first state (the state as shown in solid line in FIG. 1) in which the first port (P1) and the second port (P2) communicate with each other and in which the third port (P3) and the fourth port (P4) communicate with each other, and a second state (the state as shown in broken line in FIG. 1) in which the first port (P1) and the fourth port (P4) communicate with each other and in which the second port (P2) and the third port (P3) communicate with each other.

The air conditioner (1) performs a heating operation when the four-way switching valve (7) is in the first state, and performs a cooling operation when the four-way switching valve (7) is in the second state. During the heating operation, a vapor compression refrigeration cycle in which the outdoor heat exchanger (5) serves as an evaporator and the indoor heat exchanger (22) serves as a condenser, is performed in the refrigerant circuit shown in FIG. 1. In contrast, during the cooling operation, a vapor compression refrigeration cycle in which the outdoor heat exchanger (5) serves as a condenser and the indoor heat exchanger (22) serves as an evaporator, is performed in the refrigerant circuit shown in FIG. 1.

### <Structure of Indoor Unit >

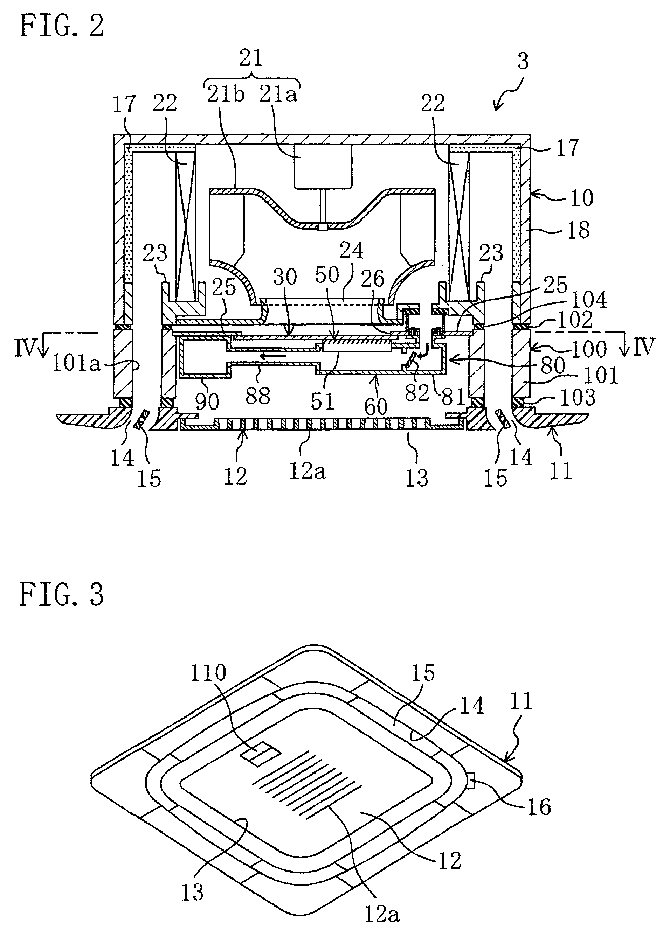

A structure of the indoor unit (3) will be described in detail, based on FIG. 2 and FIG. 3.

As shown in FIG. 2, the indoor unit (3) includes a main unit (10) having the indoor fan (21) and the indoor heat exchanger (22), a cleaning unit (100) placed on the room side of the main unit (10), and a decorative panel (11) which covers the room side of the cleaning unit (100). That is, the indoor unit (3) is configured by the main unit (10), the cleaning unit (100) and the decorative panel (11) sequentially stacked from the top, as shown in FIG. 2.

The main unit (10) has a box-like main casing (18) which is open toward the room. The indoor fan (21), the indoor heat exchanger (22), a drain pan (23), and a bell mouth (24) are disposed in the main casing (18).

A heat insulation (17) is attached to the inner surface of the main casing (18). The main casing (18) is supported on and suspended from the wall above the ceiling such that the opening of the main casing (18) is positioned on the room side as described later.

The indoor fan (21) is a so-called "turbo fan." As shown in FIG. 2, the indoor fan (21) is located at a generally central location of the main casing (18) of the main unit (10), and positioned above an inlet (13) of the decorative panel (11). The indoor fan (21) has a fan motor (21a) and an impeller (21b). The fan motor (21a) is fixed to the top plate of the main casing (18). The impeller (21b) is connected to the shaft of the fan motor (21a).

The bell mouth (24) is provided under the indoor fan (21) so as to communicate with the inlet (13). In the interior of the indoor unit (3), the bell mouth (24) partitions the space on the upstream side of the indoor heat exchanger (22) into a space on the indoor fan (21) side and a space on the inlet grill (12) side, as shown in FIG. 2. The air drawn by the indoor fan (21) from under the bell mouth (24) is blown out in a circumferential direction above the bell mouth (24).

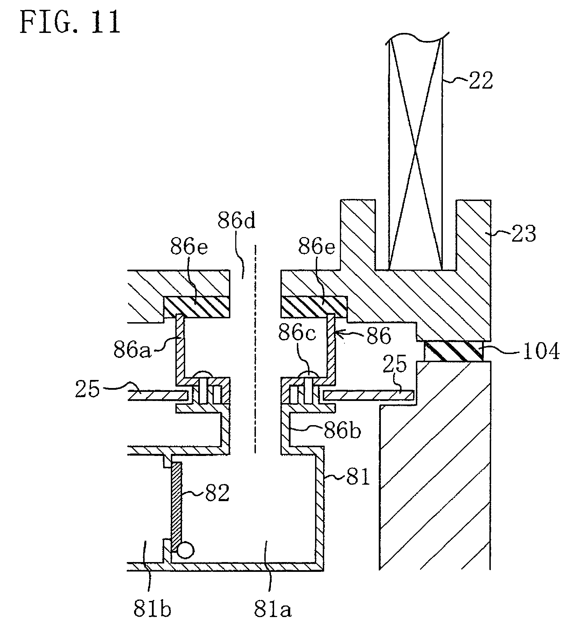

Further, the ventilation partition plate configured by the bell mouth (24) and the drain pan (23) has an opening (not shown) at a location corresponding to one of four corners of the rectangular parallelepiped main casing (18). The opening forms an introduction opening (86d) of an introduction duct (86) (see FIG. 11).

In the case where the indoor unit (3) does not include the cleaning unit (100) (only the main unit (10)), the above opening is closed by a cover from below (not shown) so that the air blown by the indoor fan (21) will not escape from the opening.

The indoor heat exchanger (22) has a generally square shape in plan view, and is arranged in the main casing (18) so as to surround the indoor fan (21). The indoor heat exchanger (22) exchanges heat between the room air taken by the indoor fan (21) (blown air) and the refrigerant flowing in the heat exchanger (22).

The drain pan (23) is placed under the indoor heat exchanger (22). The drain pan (23) is for receiving drain water generated as a result of condensation of water vapor in the air at the indoor heat exchanger (22). The drain pan (23) is provided with a drain pump (not shown) for draining drain water. Further, the drain pan (23) is inclined so that the drain water is collected at a place where the drain pump is provided.

The cleaning unit (100) includes a generally rectangular chamber casing (101) in plan view, in which a circular air filter (30), a dust removal mechanism (50), a dust transfer mechanism (80), and a dust collecting box (90) (a dust collecting section), etc. are disposed. As described in detail later, the cleaning unit (100) is configured to remove dust which adheres to the air filter (30) located on the intake side of the indoor fan (21) by using the dust removal mechanism (50), transfer the removed dust into the dust collecting box (90) by using the dust transfer mechanism (80), and store the dust in the dust collecting box (90).

The chamber casing (101) is configured to have the same size as the size of the main casing (18) of the main unit (10), and is located on the room side of the main casing (18), with a sealing member (102) sandwiched between the main casing (18) and the chamber casing (101), as shown in FIG. 2. Further, a decorative panel (11) is attached to the room side of the chamber casing (101), with a sealing member (103) sandwiched between the chamber casing (101) and the decorative panel (11).

Further, the chamber casing (101) is provided with four air paths (101a) along each side of the chamber casing (101). In the main unit (10), each of the air paths (101a) communicates with the space in the main casing (18) that is created in the outer peripheral region of the indoor heat exchanger (22), for allowing the air having been heat exchanged with a refrigerant in the indoor heat exchanger (22) to flow toward the room side. That is, the air having passed through the air paths (101a) in the chamber casing (101) is supplied into the indoor space through the outlet (14) of the decorative panel (11). In the chamber casing (101), as shown in FIG. 2, the inner side portions of the air paths (101a) support the drain pan (23) from below, with a sealing member (104) sandwiched therebetween.

As shown in FIG. 3, the decorative panel (11) has a rectangular, plate-like shape in plan view. As shown in FIG. 2, the decorative panel (11) is slightly larger in size than the main casing (18) of the main unit (10) and the chamber casing (101) of the cleaning unit (100) in plan view. As described above, the decorative panel (11) is attached to the chamber casing (101) so as to cover the bottom side of the chamber casing (101), with the sealing member (103) sandwiched between the chamber casing (101) and the decorative panel (11). With this structure, the decorative panel (11) is exposed to the indoor space as shown in FIG. 3.

Further, the decorative panel (11) is provided with one inlet (13) and four outlets (14, 14, ... ) as shown in FIG. 3. The inlet (13) has a generally rectangular shape, and is disposed in a central portion of the decorative panel (11). An inlet grill (12) having a slit portion (12a) is fit in the inlet (13). The outlets (14) have an elongated rectangular shape, and are provided along sides of the decorative panel (11) so as to correspond to the air paths (101a, 101a, ... ) of the cleaning unit (100). Further, each outlet (14) is provided with a wind direction control plate (15) (see FIG. 2 and FIG. 3). The wind direction control plate (15) is rotatable and capable of adjusting the wind direction (blowout direction).

The inlet grill (12) is a cover member having, in its central portion thereof, the slit portion (12a) in which a plurality of slit-like openings are formed. The inlet grill (12) is attached to cover the inlet (13) of the decorative panel (11). Further, the inlet grill (12) is provided with a nozzle insertion portion (110) for inserting a nozzle of a cleaner. The nozzle of the cleaner can be inserted in the nozzle insertion portion (110) so that the dust stored in the dust collecting box (90) of the cleaning unit (100) can be collected by the cleaner.

The decorative panel (11) is provided with an LED (16) which lights, for example, when the amount of dust stored in the dust collecting box (90) of the cleaning unit (100) exceeds a predetermined amount, or when the dust removal mechanism (50) is removing the dust adhering to the air filter (30) as described later.

### <Structure of Cleaning Unit>

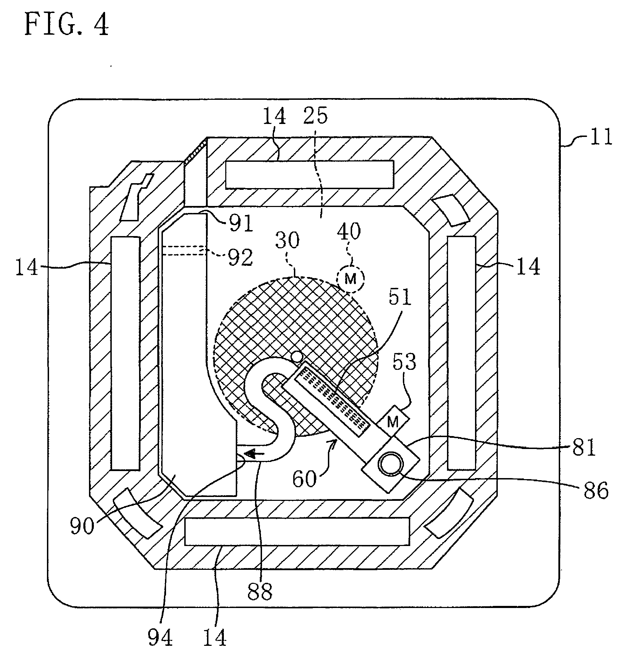

Now, an internal structure of the cleaning unit (100) will be described in detail, based on FIGS. 4-12.

As mentioned above, the cleaning unit (100) includes the chamber casing (101) having a generally rectangular shape in plan view, in which the air filter (30), the dust removal mechanism (50), the dust transfer mechanism (80), the dust collecting box (90), etc. are disposed. The cleaning unit (100) is for cleaning the air filter (30) located under the inlet of the indoor fan (21) in the main unit (10).

Also, the cleaning unit (100) is provided with the partition plate (25) covering the lower side of the bell mouth (24). The partition plate (25) partitions a space between the bell mouth (24) and the inlet grill (12) into upper and lower spaces as shown, for example, in FIG. 2. That is, the partition plate (25) separates the space on the upstream side of the indoor heat exchanger (22) into a space on the indoor heat exchanger (22) side, the space including the bell mouth (24), and a space on the inlet grill (12) side.

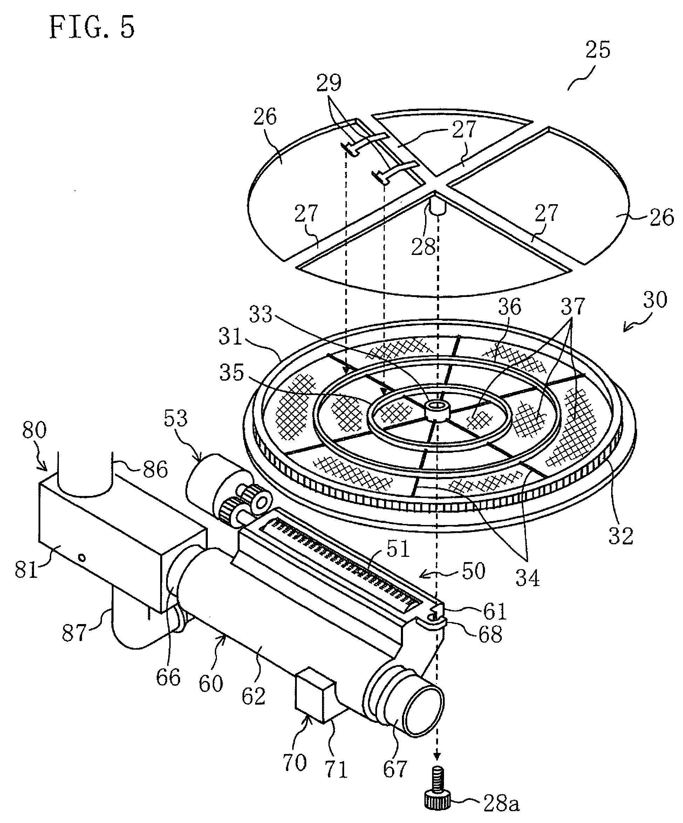

An air vent (26) for allowing air taken through the inlet (13) to flow into the bell mouth (24) is provided in the central portion of the partition plate (25), as shown in FIG. 2 and FIG. 5. The air filter (30) is located so as to cover the air vent (26) from below. That is, the partition plate (25) is provided so as to close the space between the inner surface of the side wall of the chamber casing (101) of the cleaning unit (100) and the air filter (30). In this structure, all the air taken through the inlet (13) passes through the air filter (30). Thus, the provision of the partition plate (25) makes it possible to prevent the dust contained in the air on the upstream side of the partition plate (25) from flowing into the downstream side of the partition plate (25) without being captured on the air filter (30).

A shown in FIG. 5, the air vent (26) formed in the partition plate (25) is divided into sectors by four radial beam members (27) extending in a radial direction. The radial beam members (27) are connected to each other at the center of the circular air vent (26). The center of the air vent (26) is provided with a cylindrical, filter turning shaft (28) which protrudes downward from the center of the air vent (26). The filter turning shaft (28) is a rotating shaft for rotating the air filter (30). Further, one of the radial beam members (27) is provided with two filter pressing members (29) for pressing the air filter (30) from above.

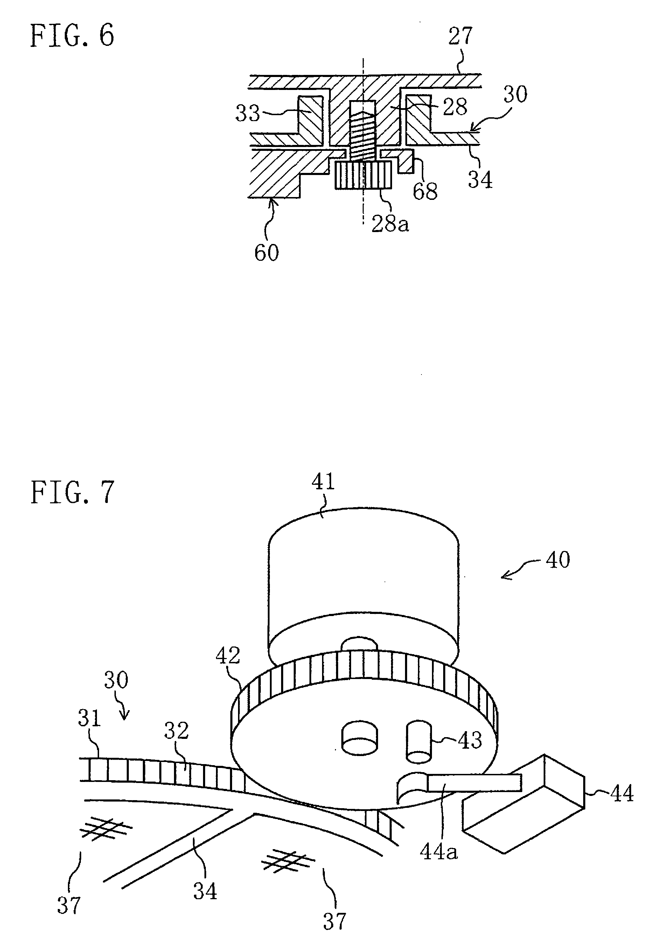

As shown in FIG. 5, the air filter (30) is located under the air vent (26) of the partition plate (25), and has a disk-like shape whose diameter is larger than the diameters of the bell mouth (24) and the air vent (26). Specifically, the air filter (30) includes a ring-shaped filter body (31) and a mesh member (37). The outer peripheral surface of the filter body (31) is provided with a gear (32). A center portion of the filter body (31) is provided with a cylindrical shaft insertion portion (33) supported by six radial ribs (34) which extend in a radial direction. In other words, each radial rib (34) extends radially from the shaft insertion portion (33) to be connected to the filter body (31). Further, the inner side of the filter body (31) is provided with a ring-shaped inner circumferential rib (35) and an outer circumferential rib (36) which are concentric with the filter body (31). The diameter of the outer circumferential rib (36) is larger than the diameter of the inner circumferential rib (35). Here, as shown in FIG. 6, the inner diameter of the shaft insertion portion (33) is larger than the diameter of the filter turning shaft (28) attached to the partition plate (25) and the diameter of the head of a fastening screw (28a) described later.

The mesh member (37) is stretched over the filter body (31). The air taken through the inlet (13) passes through the mesh member (37) of the air filter (30), and flows into the bell mouth (24). Here, the dust in the air is captured on the mesh member (37).

Further, the air filter (30) is biased downward by the filter pressing members (29) which abut on each upper surface of the ring-shaped circumferential ribs (35, 36). Thus, the air filter (30) is pressed against a rotating brush (51), described later, of the dust removal mechanism (50). With this structure, it is possible to improve the dust removal efficiency of the dust removal mechanism (50).

As shown in FIG. 5 and FIG. 6, the shaft insertion portion (33) of the air filter (30) is rotatably fitted to the filter turning shaft (28) attached to the partition plate (25). A dust storage container (60) of the dust removal mechanism (50) is located under the air filter (30). The air filter (30) is fitted to the filter turning shaft (28), and in this state, a filter attachment portion (68) of the dust storage container (60), described later, and the filter turning shaft (28) attached to the partition plate (25) are fastened to each other with the fastening screw (28a). This structure allows the air filter (30) to be kept between the partition plate (25) and the dust storage container (60).

As shown in FIG. 4 and FIG. 7, a filter drive section (40) for rotating the air filter (30) is provided at a location in the vicinity of the air filter (30). The filter drive section (40) includes a filter drive motor (41) and a limit switch (44) as shown in FIG. 7. The drive shaft of the filter drive motor (41) is provided with a drive gear (42), which engages with the gear (32) of the air filter (30). One end surface of the drive gear (42) (the lower surface in the drawing) is provided with a switch actuating portion (43) which is a protrusion. The switch actuating portion (43) abuts against a lever (44a) of the limit switch (44) by the rotation of the drive gear (42), and thereby moves the lever (44a). When the lever (44a) moves, the limit switch (44) detects the movement of the lever (44a). In other words, the switch actuating portion (43) and the limit switch (44) detect the rotation of the drive gear (42), and therefore, it is possible to detect timing of actuation of the dust removal mechanism (50) according to the number of rotations of the drive gear (42), or detect a malfunction in the case where the drive gear (42) does not rotate.

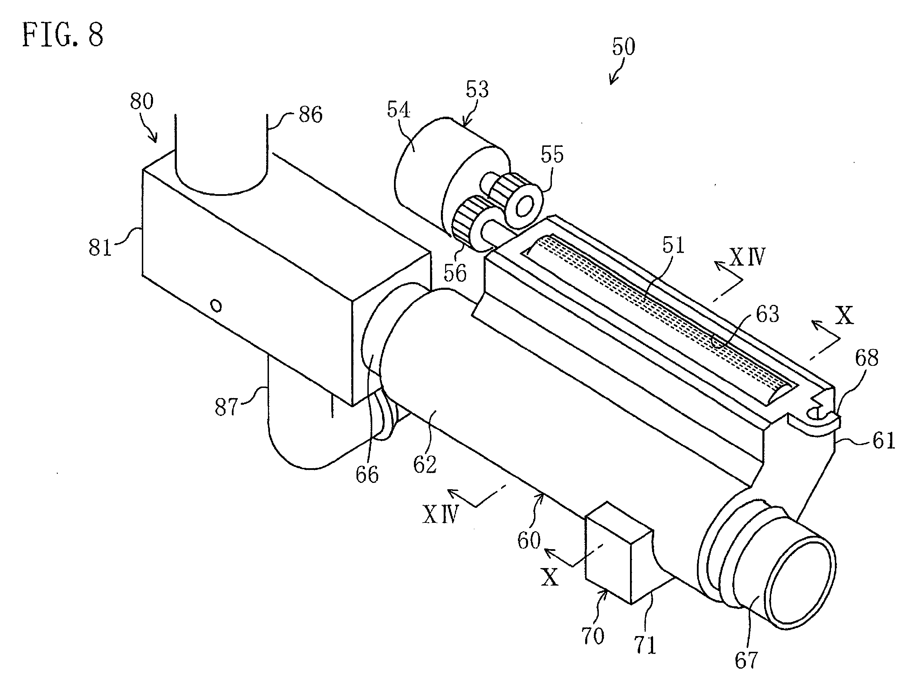

Next, the dust removal mechanism (50), the storage amount detection mechanism (70), the dust transfer mechanism (80), and the dust collecting box (90), all provided in the cleaning unit (100), will be described with reference to FIGS. 8-12.

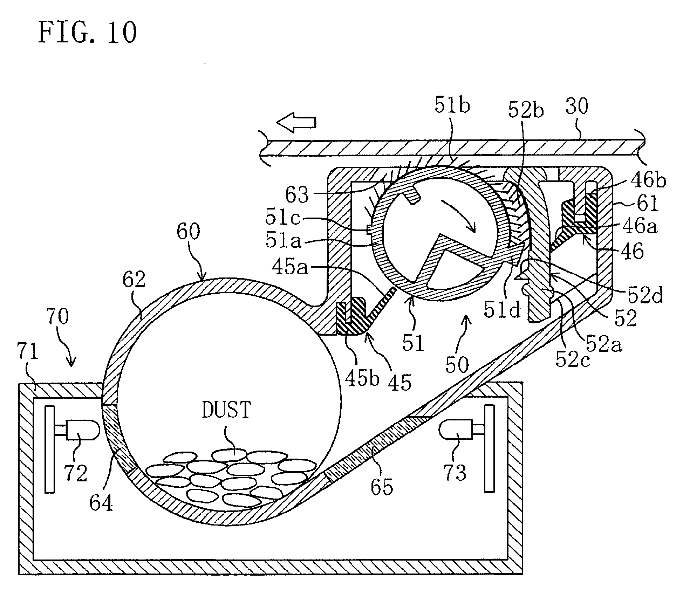

The dust removal mechanism (50) is for removing dust captured on the air filter (30). The dust removal mechanism (50) includes, as shown in FIG. 8 and FIG. 10, a rotating brush (51) (a dust removal brush), a cleaning brush (52), a brush drive mechanism (53), and a dust storage container (60) (i.e., a dust case) for storing the removed dust. As shown in FIG. 10, the rotating brush (51) and the cleaning brush (52) are provided in a brush opening (63) of the dust storage container (60).

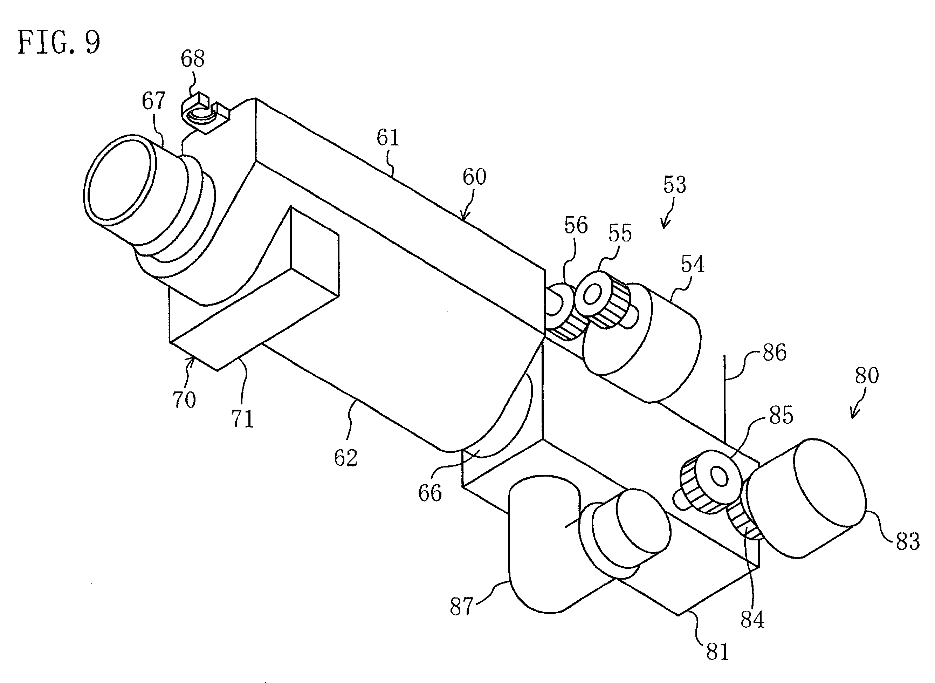

As described in detail later, the rotating brush (51) is for removing dust captured on the air filter (30) by a brush portion (51b) provided on an elongated cylindrical shaft (51a) (a body). Also, the rotating brush (51) is driven by the brush drive mechanism (53) to rotate in a reversible manner, as described later. As shown in FIG. 8 and FIG. 9, the brush drive mechanism (53) includes a brush drive motor (54), and a drive gear (55) and a driven gear (56) engaging with each other. The drive gear (55) is connected to a drive shaft of the brush drive motor (54), and the driven gear (56) is connected to an end of the shaft (51a) of the rotating brush (51). With this structure, the rotation of the brush drive motor (54) is transferred to the rotating brush (51) by way of the drive gear (55) and the driven gear (56), thereby rotating the rotating brush (51).

As shown in FIG. 10, the cleaning brush (52) is provided on a side of the rotating brush (51) so as to be capable of coming in contact with the rotating brush (51). The cleaning brush (52) includes a plate-like body (52a) (a supporting member), and a brush portion (52b) (a removal brush) provided on a surface of the body (52a), and a spring member (52c) by which the body (52a) is elastically supported on the dust storage container (60). As described in detail later, the cleaning brush (52) is configured such that when the rotating brush (51) is rotated, the brush portion (51b) of the rotating brush (51) comes in contact with the brush portion (52b) of the cleaning brush (52), and thereby removing the dust which adheres to the brush portion (51b) of the rotating brush (51).

Each of the rotating brush (51) and the cleaning brush (52) has a length equal to or greater than the radius of the circular air filter (30), and is arranged to extend radially outward from the center of the air filter (30). That is, the dust removal mechanism (50) is positioned so as to extend in a radial direction of the air filter (30) as shown in FIG. 4.

In the above structure, when the rotating brush (51) is rotated by the brush drive mechanism (53), the brush portion (52b) of the cleaning brush (52) comes in contact with the brush portion (51b) of the rotating brush (51), and the dust is removed from the brush portion (51b) of the rotating brush (51) by the cleaning brush (52). That is, the cleaning brush (52) is for removing dust from the rotating brush (51) and for cleaning the rotating brush (51), and the brush drive mechanism (53) is for rotating the rotating brush (51) such that the brush portion (51b) of the rotating brush (51) is scraped on the cleaning brush (52) to remove dust caught in the brush portion (51b).

The structures of the rotating brush (51) and the cleaning brush (52) will be described in detail later.

The dust storage container (60) is for collecting and temporarily storing dust removed from the rotating brush (51) by the cleaning brush (52). As shown in FIG. 10, the dust storage container (60) is a columnar container whose upper portion protrudes laterally relative to the lower portion thereof in side view (when viewed from the right side of FIG. 8), which means that the dust storage container (60) is slightly bent at the middle to form an inclined V-shape in side view. The upper portion of the dust storage container (60) is a removal section (61) in which the rotating brush (51) for removing dust adhering to the air filter (30) and others are disposed. The lower portion of the dust storage container (60) is a storage section (62) for storing dust removed from the air filter (30) with the rotating brush (51).

Specifically, the removal section (61) has, in its top surface, a brush opening (63) (an opening) extending in a lengthwise direction of the removal section (61). As mentioned above, the cleaning brush (52) and the rotating brush (51) of the dust removal mechanism (50) are located in the brush opening (63).

A first sealing member (45) (a sealing member) and a second sealing member (46) are provided in the removal section (61) to seal a gap between the inner wall surface of the brush opening (63) and the rotating brush (51), and a gap between the inner wall surface of the brush opening (63) and the cleaning brush (52). The first sealing member (45) is provided between the removal section (61) and the storage section (62), i.e., on the inner wall surface of the dust storage container (60) that is opposite to the cleaning brush (52) relative to the rotating brush (51). The first sealing member (45) has an approximately square U-shape cross section, and includes an attachment portion (45b) part of which is inserted in a groove formed in an inner surface of the dust storage container (60), and a sealing portion (45a) which protrudes from the attachment portion (45b) and extends toward the rotating brush (51). The second sealing member (46) is provided on the dust storage container (60) at a side opposite to the rotating brush (51) relative to the cleaning brush (52). The second sealing member (46) also has an approximately square U-shape cross section, and includes an attachment portion (46b) which engages with a wall portion protruding from an inner surface of the dust storage container (60), and a sealing portion (46a) which protrudes from the attachment portion (46b) and extends toward the cleaning brush (52).

By providing the first and second sealing members (45, 46) in the dust storage container (60) as described above, it is possible to prevent dust in the dust storage container (60) from flowing out through the gap in the brush opening (63) of the dust storage container (60).

Further, the filter attachment portion (68) is provided on a side surface of the removal section (61) as shown in FIG. 8. The filter attachment portion (68) is a generally U-shaped protrusion in plan view, and of which the opening is open toward the direction to which the removal section (61) protrudes laterally from the storage section (62). As shown in FIG. 6, the width dimension of the generally U-shaped inner side of the filter attachment portion (68) is larger than the diameter of the screw portion of the fastening screw (28a) which is screwed into the filter turning shaft (28) of the partition plate (25), and is smaller than the diameter of the filter turning shaft (28).

According to this structure, as shown in FIG. 6, the fastening screw (28a) is screwed into the filter turning shaft (28), with the air filter (30) sandwiched between the filter attachment portion (68) and the radial beam members (27) of the partition plate (25). Therefore, the air filter (30) can be fixed between the filter attachment portion (68) and the partition plate (25). To detach the air filter (30), the fastening screw (28a) is loosened, and the dust storage container (60) having the filter attachment portion (68) is moved in a direction opposite to the direction along which the removal section (61) protrudes (opposite to the direction to which the filter attachment portion (68) opens), thereby making it possible to remove only the filter attachment portion (68) which holds the air filter (30) from below, from under the shaft insertion portion (33) of the air filter (30), with the fastening screw (28a) screwed into the filter turning shaft (28). As mentioned above, the inner diameter of the shaft insertion portion (33) of the air filter (30) is larger than the diameter of the filter turning shaft (28) of the partition plate (25) and the diameter of the fastening screw (28a), and that is why the air filter (30) can be removed from below.

With this attachment structure of the air filter (30), the air filter (30) can be easily detached without removing the fastening screw (28a).

The lower side (bottom side) of the storage section (62) protrudes to have an arc shape in cross section as shown, for example, in FIG. 8 and FIG. 10. The dust removed from the rotating brush (51) with the cleaning brush (52) falls into the arc portion of the storage section (62) and is stored in the arc portion. Further, the storage section (62) has a cylindrical shape, and is open at both ends (66, 67) along its longitudinal direction. A damper box (81) of the dust transfer means (80), described later, is connected to the first edge portion (66) of the storage section (62), and a transfer duct (88) of the dust transfer means (80), described later, is connected to the second edge portion (67) of the storage section (62).

Further, as shown in FIG. 10, the dust storage container (60) is provided with storage amount detection means (70) for detecting an amount of dust stored in the storage section (62). The storage amount detection means (70) includes an LED (72) and a phototransistor (73) accommodated in a sensor box (71). The sensor box (71) is provided closer to the second edge portion (67) of the storage section (62) of the dust storage container (60), and extends in a transverse direction of the storage section (62) and covers the bottom portion of the storage section (62) (see FIGS. 5, 8 and 9). The LED (72) and the phototransistor (73) are disposed in the sensor box (71) so as to oppose each other, with the storage section (62) interposed therebetween in the transverse direction of the storage section (62). Further, a first transparent window (64) and a second transparent window (65), which are respectively corresponding to the LED (72) and the phototransistor (73), are formed in the wall of the storage section (62).

In the storage amount detection means (70) according to the above structure, light emitted by the LED (72) passes through the transparent window (64) and then the second transparent window (65), and thereafter, the luminous intensity of the light is detected by the phototransistor (73). The amount of dust stored in the storage section (62) (i.e., the amount of dust filling the storage section (62)) can be checked according to the luminous intensity detected by the phototransistor (73). Specifically, in the case where the amount of dust stored is small, the transmittance of light passing from the first transparent window (64) to the second transparent window (65) in the storage section (62) is high, and therefore, the luminous intensity detected by the phototransistor (73) is high. In contrast, in the case where the amount of dust stored is large, the transmittance of light passing from the first transparent window (64) to the second transparent window (65) in the storage section (62) is low, and therefore, the luminous intensity detected by the phototransistor (73) is low. Therefore, according to the storage amount detection means (70), it is possible to determine that a large amount of dust is stored in the storage section (62) in the case, for example, where the luminous intensity is a certain value or less. Thus, if the storage amount detection means (70) detects that the dust storage amount in the storage section (62) is large even after a dust transfer operation by the dust transfer means (80), described later, for transferring dust in the storage section (62), it is possible to determine that the dust collecting box (90), to which the dust is to be transferred, is full.

Further, as described above, the storage amount detection means (70) is provided closer to the second edge portion (67) of the storage section (62) that is connected to a transfer duct (88). Therefore, even in the case where the second edge portion (67) is clogged with dust while the dust is transferred and stored in the dust collecting box (90) through the transfer duct (88), the clogging can be detected by the storage amount detection means (70). That is, according to the structure of the present embodiment, the storage amount detection means (70) is provided at a location close to the second edge portion (67) of the storage section (62) to which the transfer duct (88) is connected, because that portion is most likely to be clogged with the dust. As a result, it is possible to reliably detect the clogging with dust.

The dust transfer means (80) includes the above-mentioned damper box (81) and the transfer duct (88), and an introduction duct (86) and a suction duct (87), as shown, for example, in FIGS. 4, 5, 8, 11, and 12.

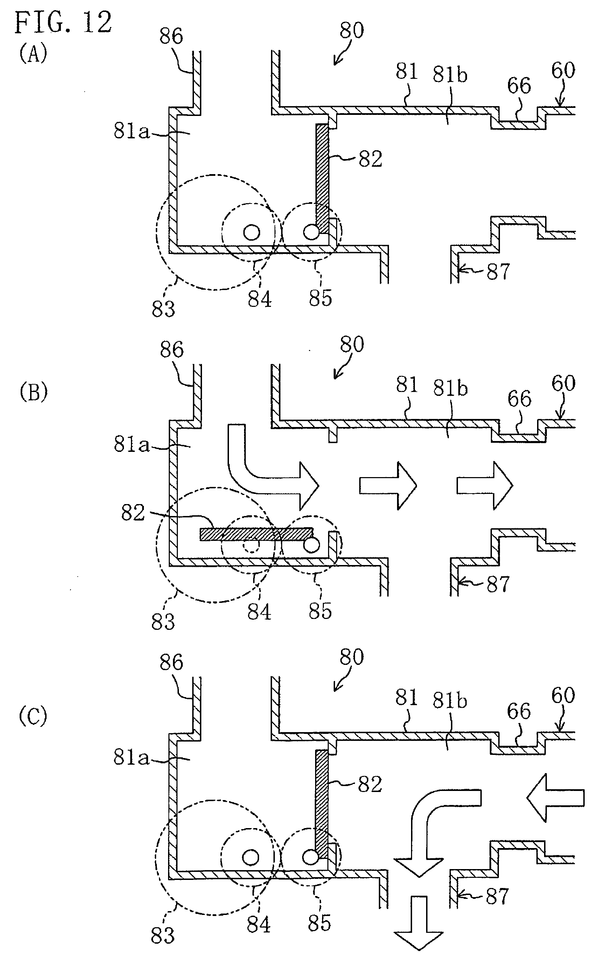

The damper box (81) has a rectangular parallelepiped shape. One end of the damper box (81) along the longitudinal direction thereof is connected to the first edge portion (66) of the storage section (62). A damper (82), which is an opening and closing member, is provided in the damper box (81) as shown in FIG. 11 and FIG. 12. When the damper (82) is closed, the interior space of the damper box (81) is partitioned into two chambers along the longitudinal direction of the damper box (81). That is, the interior space of the damper box (81) is partitioned by the damper (82) into a first chamber (81a) on the other side and a second chamber (81b) on the one side to which the dust storage container (60) is connected. As mentioned above, the first edge portion (66) of the storage section (62) is connected to the second chamber (81b) formed on the one side of the damper box (81). The second chamber (81b) and the storage section (62) communicate with each other.

As shown in FIG. 9 and FIG. 12, the dust transfer means (80) includes a damper drive motor (83), a drive gear (84), and a driven gear (85), for opening and closing the damper (82). The drive gear (84) is connected to a drive shaft of the damper drive motor (83). The driven gear (85) is connected to a rotating shaft of the damper (82). The drive gear (84) and the driven gear (85) are disposed to engage each other. This structure allows the rotation of the damper drive motor (83) to be transferred to the rotating shaft of the damper (82) by way of the gears (84, 85). As a result, the damper (82) rotates about its rotating shaft according to the rotation of the damper drive motor (83), and thereby performing opening and closing movements.

As shown in FIG. 11, one end of the introduction duct (86) is connected to the upper surface of the damper box (81), and communicates with the first chamber (81a) in the damper box (81). On the other hand, the other end of the introduction duct (86), which extends vertically upward from the damper box (81) and goes through the partition plate (25) between the cleaning unit (100) and the main unit (10), is connected to a protrusion portion of the drain pan (23) of the main unit (10). The introduction duct (86) includes an upstream duct (86a) and a downstream duct (86b) each having a circular cross section. The two members (86a, 86b) are connected to each other in a vertical direction with a fastening screw (86c).

The cross-sectional area (the flow path area) of the upstream duct (86a) is larger than the cross-sectional area (the flow path area) of the downstream duct (86b). The lower end (the lower side in FIG. 11) of the downstream duct (86b) is connected to the upper surface of the damper box (81), whereas the upper end (the upper side in FIG. 11) of the upstream duct (86a) comes in contact with the horizontally-extending protrusion portion of the drain pan (23), with a sealing member (86e) interposed therebetween. An introduction opening (86d), which is a through hole, is formed in the protrusion portion of the drain pan (23). The introduction opening (86d) allows the upstream duct (86a) to communicate with the space on the indoor fan (21) side. That is, the introduction duct (86) is configured to introduce the air blown by the indoor fan (21) into the damper box (81).

Further, the connecting portion between the upstream duct (86a) and the downstream duct (86b) of the introduction duct (86) is located at a through hole in the partition plate (25). Specifically, the ducts (86a, 86b) are connected to each other in such a manner that the periphery of the through hole formed in the partition plate (25) is sandwiched between a bottom plate of the upstream duct (86a) and an upper end flange of the downstream duct (86b). This structure allows the upper end of the introduction duct (86) to be connected to the bell mouth (24), with the periphery of the through hole in the partition plate (25) sandwiched between a bottom plate of the upstream duct (86a) and an upper end flange of the downstream duct (86b) to avoid dropping of the introduction duct (86).

Further, because of the structure in which the periphery of the through hole formed in the partition plate (25) is sandwiched between the bottom plate of the upstream duct (86a) and the upper end flange of the downstream duct (86b) as described above, the upstream duct (86a) and the downstream duct (86b) are rotatable with respect to the partition plate (25) at the connecting portion between the upstream duct (86a) and the downstream duct (86b). Moreover, according to the present embodiment, the upstream duct (86a) and the sealing member (86e), too, are rotatable at the contact portion. Therefore, the introduction duct (86), the damper box (81), and the dust removal mechanism (50) can rotate integrally with each other about the shaft (an introduction opening) of the introduction duct (86).

One end, i.e., intake side, of the suction duct (87) is connected to a bottom surface on the one end of the damper box (81), and communicates with the second chamber (81b) in the damper box (81), as shown, for example, in FIG. 8 and FIG. 12. The other end, i.e., discharge side, of the suction duct (87) is connected to a nozzle insertion portion (110) provided on the decorative panel (11). Although not shown in the drawings, the nozzle insertion portion (110) has an opening for inserting a nozzle of a cleaner for suction.

As shown in FIGS. 2-4, one end of the transfer duct (88) is connected to the second edge portion (67) of the storage section (62) of the dust storage container (60), and the other end of the transfer duct (88) is connected to a dust collecting box (90), described later. The transfer duct (88) allows the dust storage container (60) and the dust collecting box (90) to communicate with each other, and dust can be transferred through the transfer duct (88). The transfer duct (88) is made of a flexible tube.

In the dust transfer means (80) having the above structure, the damper (82) in the damper box (81) is closed during a normal operation performing heating and cooling operations (see FIG. 12 (A)). Thus, the air blown by the indoor fan (21) is not guided into the second chamber (81b) of the damper box (81). On the other hand, the damper (82) of the damper box (81) is opened in the case where the dust in the dust storage container (60) is transferred to the dust collecting box (90) (see FIG. 12 (B)). Thus, the air blown by the indoor fan (21) is guided into the dust storage container (60) through the introduction duct (86) and the damper box (81). As a result, the dust in the dust storage container (60) flows through the transfer duct (88) together with the guided air, and is transferred into the dust collecting box (90). In other words, the dust in the dust storage container (60) can be removed from inside the dust storage container (60) and can be transferred to a certain place by opening the damper (82) in the damper box (81) and utilizing the air blown by the indoor fan (21) as described above.

Further, in the dust transfer means (80), the damper (82) in the damper box (81) is closed as well, in the case where the dust collected in the dust collecting box (90) is discharged to the outside of the casing (10) (FIG. 12 (C)). In this case, as described in detail later, the dust in the dust collecting box (90) is suctioned by a cleaner from the nozzle insertion portion (110) through the transfer duct (88), the damper box (81), and the suction duct (87).

As mentioned above, the dust collecting box (90) is for storing dust transferred from inside the dust storage container (60). The dust collecting box (90) has a slightly elongated, generally rectangular parallelepiped shape, and is located under the partition plate (25) like the dust storage container (60) as shown, for example, in FIG. 4. Further, the dust collecting box (90) is positioned on a lateral side of the air filter (30) along one edge of the partition plate (25) such that the dust collecting box (90) does not overlap with the air filter (30) in plan view. Moreover, in order to reliably prevent interference with the air filter (30), the dust collecting box (90) is configured such that a side plate on the air filter (30) side has an arc shape so as to correspond to the outer periphery of the air filter (30).

Further, a side surface of one edge portion (one side) of the dust collecting box (90) is provided with a receiving opening (94), and the other end of the transfer duct (88) is connected to the receiving opening (94). The other edge portion (the other side) of the dust collecting box (90) is provided with a discharge opening (91) which is open to the inside of the chamber casing (101) of the cleaning unit (100). In other words, the dust collecting box (90) is provided with the discharge opening (91) at its one end that is opposite to the side to which the transfer duct (88) is connected, and therefore, air can smoothly flow in the interior of the dust collecting box (90) in its longitudinal direction. In addition, the cross-sectional area of the dust collecting box (90) is smaller on the discharge opening (91) side than the other part of the dust collecting box (90).

Further, a filter (92) is provided in the dust collecting box (90) at a location close to the discharge opening (91). When dust is transferred into the dust collecting box (90) from the dust storage container (60), the filter (92) captures the transferred dust and does not allow the dust to flow out through the discharge opening (91), while allowing the air to be discharged through the discharge opening (91). Further, when dust is taken from the dust collecting box (90) by suction of a cleaner, room air flows into the dust collecting box (90) through the discharge opening (91). However, dust in the air which flows into the dust collecting box (90) is captured on the filter (92).

As described above, the pressure in the dust collecting box (90) is properly balanced by the intake and discharge of air through the discharge opening (91). Thus, the dust transfer operation to the dust collecting box (90) and the dust discharge operation from the dust collecting box (90) are properly done.

### <Structure of Brush>

The structures of the rotating brush (51) and the cleaning brush (52) will be described in detail below, based on FIG. 10.

As mentioned above, the rotating brush (51) removes dust from the mesh member (37) of the air filter (30) by the brush portion (51b) which comes in contact with the mesh member (37) of the rotating air filter (30). Specifically, the rotating brush (51) includes an elongated, generally cylindrical shaft (51a), and a brush portion (51b) provided on part of the outer peripheral surface of the shaft (51a). The brush portion (51b) is formed by providing bristles on a base material. Further, the brush portion (51b) is provided on part of the outer surface of the shaft (51a) along a circumferential direction (in the present embodiment, approximately a half of the shaft (51a) along the circumferential direction), across the axial direction of the shaft (51a).

The outer peripheral surface of the shaft (51a) is provided with a positioning protrusion (51c) and an adhesion preventing protrusion (51d) (a protrusion) which extend across an axial direction. These protrusions (51c, 51d) enable positioning of the brush portion (51b) on the shaft (51a) in a circumferential direction.

The positioning protrusion (51c) is provided for the positioning of one of both edge portions of the brush portion (51 b) of the rotating brush (51) in the circumferential direction (rotational direction) that is on the side opposed to the cleaning brush (52) in the state in which the brush portion (51b) removes the dust on the air filter (30) (the state shown in FIG. 10). The positioning protrusion (51 c) has a generally rectangular cross section, and a height which enables the positioning of a base fabric (shown in thick line in the drawing) to be a base of the brush portion (51b).

The adhesion preventing protrusion (51d) is provided for the positioning of one of both edge portions of the brush portion (51b) of the rotating brush (51) in the shaft circumferential direction (rotational direction) that is on the side closer to the cleaning brush (52) (the end on the cleaning brush side) in the state in which the brush portion (51b) removes the dust on the air filter (30) (the state shown in FIG. 10). The adhesion preventing protrusion (51d) is provided such that it covers the end of the brush portion (51b).

Here, in the structure such as one described in the present embodiment in which dust adhering to the rotating brush (51) is removed by the cleaning brush (52), the rotating brush (51) is rotated to make the dust once adhere to the cleaning brush (52), and thereafter, the rotating brush (51) is rotated in an opposite direction to scrape the dust off the cleaning brush (52) as described in detail later. Thus, the dust can easily adhere to an edge portion of the brush portion (51b) of the rotating brush (51) (i.e., an edge portion which first comes in contact with the cleaning brush (52) when the cleaning brush (52) scrapes off the dust), and the dust gathers like a band at the edge portion. In this case, the dust gathers like a band at the edge portion of the brush portion (51b) along the outer peripheral surface of the shaft (51a). Thus, the dust may stick to the shaft (51a), or the dust may not be easily separated and removed from the rotating brush (51).

In view of this, the adhesion preventing protrusion (51d) provided in the present embodiment prevents the dust adhering to the edge portion of the brush portion (51b) from gathering along the surface of the shaft (51a), and the dust extends while being separated from the surface of the rotating brush (51). Therefore, the adhesion preventing protrusion (51d) can avoid the situation where the dust sticks to the shaft (51a) and is not easily removed from the rotating brush (51).

Further, the adhesion preventing protrusion (51 d) has a generally trapezoid cross section, and a side surface of the adhesion preventing protrusion (51d) facing the brush portion (51b) is tilted to the brush portion (51b) with decreasing distance from the protrusion end. Since the surface of the adhesion preventing protrusion (51d) which faces the brush portion (51b) is tilted to the brush portion (51b), the bristle end of the brush portion (51b) is pushed against the tip portion of the adhesion preventing protrusion (51d), and therefore, it is possible to reliably prevent a gap between the brush portion (51b) and the adhesion preventing protrusion (51d). It is therefore possible to prevent accumulation of dust in the gap between the brush portion (51b) and the adhesion preventing protrusion (51d). Further, the brush portion (51b) is formed by providing bristles on base fabric, as will be described later. Thus, the base fabric can be positioned in contact with the base portion of the adhesion preventing protrusion (51d), thereby making it possible to achieve accurate positioning of the brush portion (51b), and prevent the brush portion (51b) from separating from the shaft (51a).

Further, the adhesion preventing protrusion (51d) is greater in height than the positioning protrusion (51c), and greater in height than the bristle end of the brush portion (51b). With this structure, the edge portion of the brush portion (51b) can be covered by the adhesion preventing protrusion (51 d) more reliably. It is therefore possible to more reliably prevent dust from extending like a band from the edge portion of the brush portion (51b) along the surface of the shaft (51a).

As mentioned before, the cleaning brush (52) is provided on a side of the rotating brush (51) (in the present embodiment, on a side opposite to the storage section (62) of the dust storage container (60) relative to the rotating brush (51)) so as to be capable of coming in contact with the rotating brush (51), and includes a body (52a) (a supporting member), a brush portion (52b), and a spring member (52c).

The body (52a) has a length approximately equal to the length of the shaft (51a) of the rotating brush (51) in an axial direction. The body (52a) is opposed to the outer peripheral surface of the rotating brush (51), with a predetermined space therebetween. An upper portion of the body (52a) has an arc shape so that the upper portion can be along the outer peripheral surface of the shaft (51a) of the rotating brush (51). The brush portion (52b) is provided on the arc upper portion of the body (52a) across the length of the body (52a). The spring member (52c) is made of a plate spring. One end of the spring member (52c) is connected to a lower end portion of the body (52a), and the other end of the spring member (52c) is connected to an inner wall of the dust storage container (60). That is, the lower end portion of the body (52a) is supported by the spring member (52c).

Further, a protrusion (52d) (a fixed-side protrusion) which protrudes toward the rotating brush (51) is provided at a lower portion of the body (52a), that is, under the brush portion (52b). The protrusion (52d) has a generally triangular cross section so that when the adhesion preventing protrusion (51d) of the rotating brush (51) passes by the protrusion (52d), the protrusion (52d) protrudes close to the locus of the protrusion end of the adhesion preventing protrusion (51 d), and only a narrow space is left between the protrusion (52d) and the adhesion preventing protrusion (51d). With this structure, it is possible to compress and elongate the band-like dust between the adhesion preventing protrusion (51 d) of the rotating brush (51) and the protrusion (52d) of the cleaning brush (52). Thus, it is possible to easily pull the dust apart into pieces having a predetermined size. Moreover, compressing the dust as described above enables a reduction in volume of the dust. Thus, more dust can be stored in the dust storage container (60). Further, since the dust can be easily pulled apart into pieces, the dust can be easily transferred to the dust collecting box (90) from the dust storage container (60).

Further, when viewed from the axial direction of the shaft (51a) of the rotating brush (51), the base portion of the protrusion (52d) on the brush portion (52b) side is closer to the brush portion (52b) than the protrusion end of the protrusion (52d) is. That is, the protrusion (52d) is configured such that, of the angles formed between the body (52a) and the base portion of the protrusion (52d) on the brush portion (52b) side, the angle closer to the brush portion (52b) is an obtuse angle. With this structure, it is possible to prevent dust from being accumulated on the protrusion (52d) of the cleaning brush (52) on the brush portion (52b) side, during rotation of the rotating brush (51) for scraping off the dust adhering to the cleaning brush (52). In other words, if one of the angles formed between the body (52a) and the base portion of the protrusion (52d) on the brush portion (52b) side, which is located closer to the brush portion (52b), is an acute angle, it means that a space opening up to the rotating brush (51) is formed at the base portion of the protrusion (52d) on the brush portion (52b) side, and the dust is accumulated in this space. However, according to the above structure, the dust can pass over the protrusion (52d), and transferred into the storage section (62) of the dust storage container (60).

Moreover, the protrusion (52d) is formed such that, of the angles formed between the body (52a) and the base portion of the protrusion (52d) on the brush portion (52b) side, the angle closer to the brush portion (52b) is an obtuse angle. Therefore, a space which expands radially outward of the rotating brush (51) from a line parallel to a tangent of the rotating brush (51) is formed at the protrusion (52d) on the brush portion (52b) side. During the rotation of the rotating brush (51), dust is rolled and increases in size as a chunk of dust in this space. Thus, the dust can be stored in the storage container (60) as a chunk of dust having a certain degree of size.

In the present embodiment, the protrusion (52d) has a generally triangular cross section, but the protrusion (52d) may have any cross sectional shape and not limited to the triangular cross section. Further, when viewed from an axis of the shaft (51a) of the rotating brush (51), a base portion of the protrusion (52d) which is opposite to the brush portion (52b) is preferably located farther from the brush portion (52b) than the protrusion end of the protrusion (52d), in other words, the angle between the body (52a) and the base portion of the protrusion (52d) which is opposite to the brush portion (52b) is preferably an obtuse angle, too. With this structure, the adhesion preventing protrusion (51 d) can easily pass over the protrusion (52d) even if the adhesion preventing protrusion (51d) of the rotating brush (51) comes in contact with the protrusion (52d) when the rotating brush (51) is rotated back to a position where the brush (51) comes in contact with the air filter (30) (the state shown in FIG. 10). Thus, it is possible to prevent damage to both of the protrusions (51d, 52d), and rotation of the rotating brush (51) is not inhibited.

The brush portions (51b, 52b) of the rotating brush (51) and the cleaning brush (52) are made of so called "pile fabric." The pile fabric is a plush material made on a base fabric in which yarn (pile yarn) is interwoven, and the length of the pile is relatively short. Further, the pile fabric is an inclined pile material in which pile is inclined in a certain direction.

Specifically, the pile of the brush portion (51b) of the rotating brush (51) is inclined rightward from the shaft (51a) as shown in FIG. 10. That is, the pile of the brush portion (51b) is inclined in a direction opposite to the turning direction of the air filter (30) (i.e., direction indicated by the white arrow in FIG. 10). When the air filter (30) turns in a direction opposite to the direction to which the pile of the brush portion (51b) is inclined, the dust captured on the mesh member (37) can be efficiently scraped off by the brush portion (51b).

Further, the pile of the brush portion (52b) of the cleaning brush (52) is inclined diagonally downward left from the body (52a) as shown in FIG. 10. That is, the pile of the brush portion (52b) is inclined in a direction opposite to the rotational direction of the rotating brush (51) when the rotating brush (51) is rotated in a counterclockwise direction. Since the rotating brush (51) is rotated in a direction opposite to the direction to which the pile of the brush portion (52b) of the cleaning brush (52) is inclined, the dust adhering to the brush portion (51b) of the rotating brush (51) can be removed by the brush portion (52b) of the cleaning brush (52).

In other words, the bristles of the brush portions (51b, 52b) of the rotating brush (51) and the cleaning brush (52) extend downward (toward the interior of the dust storage container (60)) when the rotating brush (51) and the cleaning brush (52) comes in contact with each other. Thus, the dust adhering to the rotating brush (51) and the cleaning brush (52) can be efficiently collected in the dust storage container (60).

The dust removal behavior of the rotating brush (51) and the cleaning brush (52) having the above structures will be described in detail later.

### -Operational Behavior-

Now, operational behavior of the indoor unit (3) will be described with reference to FIGS. 12-15. The indoor unit (3) is capable of switching between the normal operation in which cooling and heating operations are performed, and the filter cleaning operation for cleaning the air filter (30).

### <Normal Operation>

During the normal operation, the damper (82) of the damper box (81) is in the closed state (the state as shown in FIG. 12 (A)). The air filter (30) is not rotating, but is halted.

The indoor fan (21) is actuated in this state. Then, in the indoor unit (3), room air taken through the inlet (13) passes through the air filter (30) and flows into the bell mouth (24). When the air passes through the air filter (30), dust in the air is captured by the mesh member (37) of the air filter (30). The air having flowed into the bell mouth (24) is blown out by the indoor fan (21). The blown air is cooled or heated by heat exchange with the refrigerant of the indoor heat exchanger (22), and is then supplied into the room through each outlet (14). The room air is cooled or heated in this way. During this operation, the damper (82) of the damper box (81) is closed as shown in FIG. 12(A), and therefore, the air blown by the indoor fan (21) is not introduced to the dust storage container (60) through the damper box (81).

### <Filter Cleaning Operation>

During the filter cleaning operation, operation of the compressor (4) is stopped, and the refrigerant does not circulate in the refrigerant circuit shown in FIG. 1. The filter cleaning operation is capable of switching between a dust removal operation, a brush cleaning operation, a dust transfer operation, and a dust discharge operation. The LED (16) provided on the decorative panel (11) is on during the dust removal operation, the brush cleaning operation, and the dust transfer operation. This structure enables users to be informed that these operations are being performed.

The dust removal operation is an operation for removing dust captured by the air filter (30). The brush cleaning operation is an operation for removing dust captured by the rotating brush (51). The dust transfer operation is an operation for transferring dust from the dust storage container (60) to the dust collecting box (90). The dust discharge operation is an operation for discharging dust from the dust collecting box (90) to the outside of the indoor unit (3).

In the present embodiment, the dust removal operation and the brush cleaning operation are performed alternately.

### -Dust Removal Operation-

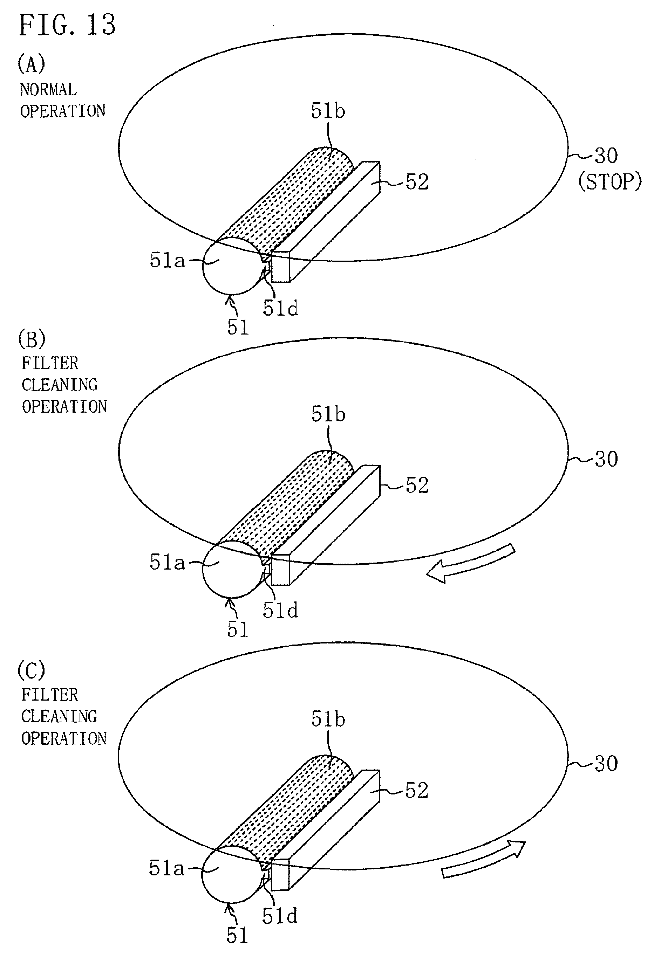

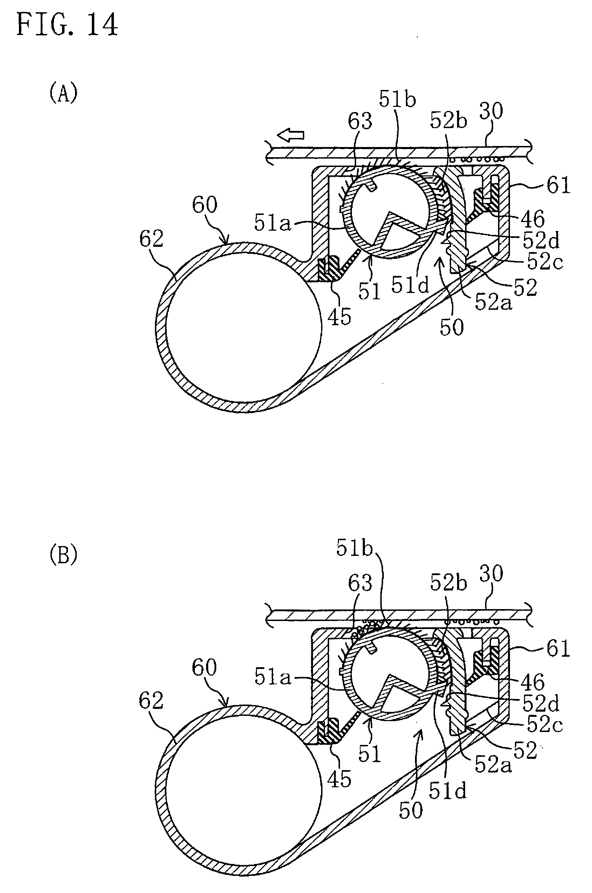

In the dust removal operation, the indoor fan (21) is operated such that the indoor fan (21) blows a breeze. The brush portion (51b) of the rotating brush (51) is brought into contact with the air filter (30). In this state, the air filter (30) is turned such that the piles of the brush portion (51b) of the rotating brush (51) are stroked the wrong way by the air filter (30) (in the direction indicated by white arrow in FIG. 13(B) and FIG. 14(A)). Here, rotation of the rotating brush (51) is stopped.

In this way, the dust on the air filter (30) is captured by the brush portion (51b) of the rotating brush (51) (FIG. 14 (B)). Here, as shown in FIG. 14(A), the piles of the brush portion (51b) are inclined in a direction opposite to the turning direction of the air filter (30), and therefore, the dust on the air filter (30) can be easily scraped off by the brush portion (51b). When the lever (44a) of the limit switch (44) of the filter drive section (40) moves, the filter drive motor (41) is stopped, and the rotation of the air filter (30) is stopped. In other words, the air filter (30) rotates at a predetermined angle and stops. Thus, the dust is removed from an area of the air filter (30) with which the brush portion (51 b) of the rotating brush (51) is brought into contact.

### -Brush Cleaning Operation-

The dust removal operation is switched to the brush cleaning operation when the rotation of the air filter (30) stops, as described above.

At the time when the rotation of the air filter (30) is stopped, the dust is gathered on the left side (i.e., the leading side of the rotational direction of the air filter (30)) of the brush portion (51b) of the rotating brush (51). This is because the dust scraped off by the brush portion (51b) is dragged along the moving air filter (30). Thus, the dust may increase in size with time, and may eventually fall into the room etc.

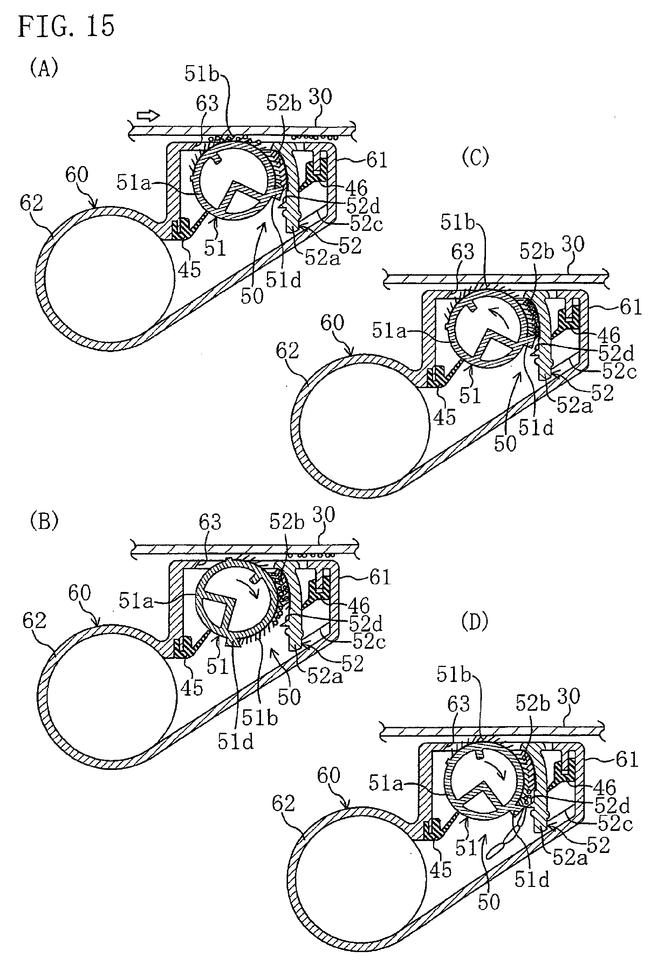

Thus, in the brush cleaning operation, the air filter (30) is first turned by the filter drive section (40) until the air filter (30) is returned by a desired angle in a counterclockwise direction, as shown in FIG. 13(C). In other words, as shown in FIG. 15(A), the air filter (30) is turned in a direction opposite to the direction along which the air filter (30) is turned during the dust removal operation, that is, in a direction generally equal to the direction along which piles of the brush portion (51b) of the rotating brush (51) extend (in the direction indicated by white arrow). In the present embodiment, the air filter (30) is turned until the air filter (30) is moved at an angle corresponding to the width of the brush portion (51b) of the rotating brush (51).

As a result of the turning, the dust gathered on one side of the brush portion (51b) of the rotating brush (51) is spread over a wide area of the brush portion (51b) by the air filter (30) and is flattened, as shown in FIG. 15(A). In other words, the dust adheres to a wide area of the brush portion (51b) more evenly. As a result, the dust adheres to the brush portion (51b) more firmly. Thus, it is possible to more reliably prevent a chunk of the dust from falling into the room etc.

Next, in the brush cleaning operation, the rotating brush (51) is rotated rightward (in a clockwise direction) in FIG. 15, with the air filter (30) being stopped. Here, the rotating brush (51) is rotated such that the brush portion (51b) to which dust is still adheres comes in contact with the brush portion (52b) of the cleaning brush (52) (FIG. 15(B)). The rotating brush (51) is rotated at a predetermined angle, and then stopped.

After that, the rotating brush (51) rotates in a direction opposite to the above rotational direction (in a leftward (counterclockwise) direction in FIG. 15). As a result, the dust captured by the brush portion (51b) of the rotating brush (51) is captured by the brush portion (52b) of the cleaning brush (52) (FIG. 15 (C)). This is because the piles of the brush portion (52b) of the cleaning brush (52) are inclined downward, i.e., inclined such that the piles are stroked the wrong way by the rotating brush (51) rotating counterclockwise, and thus the dust adhering to the brush portion (51b) of the rotating brush (51) is scraped off by the cleaning brush (52).

Further, the body (52a) of the cleaning brush (52) is pushed in a direction away from the rotating brush (51) because the brush portions (51b, 52b) of the rotating brush (51) and the cleaning brush (52) come in contact with each other. However, the body (52a) is biased to the rotating brush (51) by the spring member (52c). Therefore, the brush portions (51b, 52b) are not spaced from each other, and the cleaning brush (52) is adequately pushed against the rotating brush (51). As a result, the dust can be reliably removed from the brush portion (51b) of the rotating brush (51), and captured in the brush portion (52b) of the cleaning brush (52). The rotating brush (51) is rotated until it returns to the original position (the position shown in FIG. 15 (A)) and then stops.

After that, the rotating brush (51) is again rotated rightward (clockwise) at a predetermined rotation angle. As a result, the dust captured by the brush portion (52b) of the cleaning brush (52) is scraped off by the brush portion (51b) of the rotating brush (51) (FIG. 15 (D)). That is, the dust can be scraped off from the brush portion (52b) of the cleaning brush (52) because the piles of the brush portion (51b) of the rotating brush (51) are inclined downward along a rotational direction. Here, the cleaning brush (52) is adequately pushed against the rotating brush (51) by the spring member (52c), and therefore, the dust can be removed from the cleaning brush (52) more reliably.

Here, the dust which adheres to the brush portion (52b) of the cleaning brush (52) is not scraped off by the rotating brush (51) directly into the dust storage container (60), but adheres to an edge portion of the brush portion (51b) when the rotating brush (51) again rotates rightward (clockwise). Since the rotating brush (51) has the adhesion preventing protrusion (51 d) provided so as to cover the edge portion of the brush portion (51b), it is possible to prevent the dust from gathering at the edge portion of the brush portion (51b) along the surface of the shaft (51a). In other words, due to the adhesion preventing protrusion (51d), the dust gathers while being separated from the rotating brush (51). Further, since the side surface of the adhesion preventing protrusion (51 d) facing the brush portion (51b) is tilted to the brush portion (51b) with decreasing distance from the protrusion end of the adhesion preventing protrusion (51d), it is possible to prevent formation of a space between the adhesion preventing protrusion (51d) and the edge portion of the brush portion (51b) more reliably. As a result, it is possible to prevent the dust from accumulating or sticking to the surface of the rotating brush (51).

When the rotating brush (51) is further rotated, and the adhesion preventing protrusion (51d) provided on the surface of the rotating brush (51) and the protrusion (52d) provided on the cleaning brush (52) come close to each other, the dust is squeezed between the adhesion preventing protrusion (51d) and the protrusion (52d) (the state shown in FIG. 15(D)). Thus, the dust is compressed and elongated, and easily pulled apart at the squeezed portion. As a result, the dust can be more efficiently stored in the dust storage container (60), compared to the case where dust gathers like a band at the rotating brush (51). Also, the dust can be cut into small pieces, and therefore efficiently transferred by the air blown by the indoor fan (21) as described later.

Here, the protrusion (52d) is configured such that, of the angles formed between the body (52a) and the base portion of the protrusion (52d) on the brush portion (52b) side, the angle closer to the brush portion (52b) is an obtuse angle. Thus, it is possible to prevent the dust from accumulating at the brush portion (52b) side of the protrusion (52d) when the dust is rotated simultaneously with the rotation of the rotating brush (51) while being squeezed between the adhesion preventing protrusion (51d) and the protrusion (52d).

In this way, the dust captured by the rotating brush (51) is removed and stored in the storage section (62) of the dust storage container (60). After that, the rotating brush (51) is again rotated leftward (counterclockwise) to return to the original position (FIG. 15 (A)). The brush cleaning operation temporarily ends here.

After the above-described brush cleaning operation ends, the above-described dust removal operation is performed again. That is, the air filter (30) is turned again, and is stopped when the lever (44a) of the limit switch (44) is actuated again. As a result, the dust is removed from an area of the air filter (30) that is stroked by the brush portion (51b) of the rotating brush (51), and is captured by the brush portion (51b) of the rotating brush (51). The dust removal operation and the brush cleaning operation are alternately repeated as described above, removing the dust on the air filter (30) from an area to an area. When the dust is removed from the entire area of the air filter (30), the dust removal operation and the brush cleaning operation are completed. For example, when the lever (44a) of the limit switch (44) is actuated a predetermined number of times, the air filter (30) is considered as having made one turn, and the above operations are finished.

### -Dust Transfer Operation-

In the dust removal operation and the brush cleaning operation, the amount of dust stored in the dust storage container (60) is detected by the storage amount detection mechanism (70). Specifically, luminous intensity of light emitted by the LED (72) is detected by the phototransistor (73). If the luminous intensity detected by the phototransistor (73) is equal to or less than a set value (a lower limit), it is considered that the amount of dust stored in the storage container (60) has reached a predetermined amount, and the operation is switched to the dust transfer operation.

In the dust transfer operation, the rotating brush (51) is stopped at the position as shown in FIG. 10, and the air filter (30) is stopped as well. Further, the damper (82) of the damper box (81) is in the open state (the state as shown in FIG. 12 (B)). The indoor fan (21) is actuated in this state, and therefore, the air blown by the indoor fan (21) is introduced into the dust storage container (60) through the introduction duct (86) and the damper box (81). Thus, the dust in the dust storage container (60) is transferred into the dust collecting box (90) through the transfer duct (88) together with the air. As a result, the amount of dust stored in the dust storage container (60) decreases, and the luminous intensity detected by the phototransistor (73) increases. When the detected luminous intensity is a set value (an upper limit) or above, it is considered that almost all of the dust in the dust storage container (60) is discharged, and the dust transfer operation is finished. After that, the dust removal operation or the brush cleaning operation starts again.

### -Dust Discharge Operation-

The filter cleaning operation according to the present embodiment is performed under certain conditions. Specifically, the LED (72) is turned on after the damper (82) is opened in the dust transfer operation, and luminous intensity of light emitted by the LED (72) is detected. If the luminous intensity is equal to or less than a predetermined value, it is considered that the dust in the dust storage container (60) is not transferred by the air blown by the indoor fan (21), i.e., that the transfer path from the dust storage container (60) to the dust collecting box (90) is clogged with dust, or that the dust collecting box (90) is filled with a large amount of dust. The LED (16) on the decorative panel (11) is turned on to inform the user about the situation, and the dust discharge operation as described below is performed according to the instruction from a remote controller etc.

In the dust discharge operation, the rotating brush (51) is stopped at the position as shown in FIG. 10, and the air filter (30) is stopped as well, as in the above-described dust transfer operation. Further, the damper (82) of the damper box (81) is in the closed state (the state as shown in FIG. 12 (C)).

In this state, the nozzle of the cleaner is inserted, by the user, in the nozzle insertion portion (110) on the decorative panel (11) for suction. As a result of the suction, the dust in the dust collecting box (90) is suctioned by the cleaner through the transfer duct (88), the dust storage container (60), the damper box (81), the suction duct (87), and the nozzle insertion portion (110). The dust remaining in the dust storage container (60) is simultaneously suctioned by the cleaner through the suction duct (87). As a result, the dust in the dust collecting box (90) and the dust storage container (60) is discharged out of the indoor unit (3).

### -Effects of Embodiments-

As described above, in the present embodiment, the rotating brush (51) located on an intake side of the indoor fan (21) to remove the dust captured on air filter (30) is provided with an adhesion preventing protrusion (51d) on a generally cylindrical shaft (51a) so as to cover one of edge portions of the brush portion (51b) that is located closer to the cleaning brush (52) when the brush portion (51b) removes the dust on the air filter (30). Thus, it is possible to prevent the dust from gathering at the edge portion of the brush portion (51 b) along the outer peripheral surface of the shaft (51a). That is, due to the adhesion preventing protrusion (51d) provided on the outer peripheral surface of the shaft (51a) of the rotating brush (51), the dust adhering to the edge portion of the brush portion (51b) gathers while being separated from the rotating brush (51). As a result, it is possible to avoid the situation where the dust gathering at the edge portion of the brush portion (51b) of the rotating brush (51) sticks to the rotating brush (51) and is not easily removed from the rotating brush (51).

In particular, the side surface of the adhesion preventing protrusion (51d) facing the brush portion (51b) is tilted to the brush portion (51b) with decreasing distance from the tip of the protrusion (51d). Thus, the adhesion preventing protrusion (51d) and the brush portion (51b) are in close contact with each other, and thus it is possible to prevent a space between the adhesion preventing protrusion (51d) and the brush portion (51b). As a result, it is possible to prevent dust from accumulating in a space between the adhesion preventing protrusion (51 d) and the brush portion (51b), and possible to separate the dust from the rotating brush (51) more reliably.

Further, since the protrusion (52d) corresponding to the adhesion preventing protrusion (51d) is provided to the cleaning brush (52), the dust can be squeezed and compressed between the adhesion preventing protrusion (51d) and the protrusion (52d), and elongated in a rotational direction of the rotating brush (51). As a result, the volume of the dust can be reduced, and the dust can be efficiently stored in the dust storage container (60). Moreover, the dust can be easily cut at a portion where it is elongated while being compressed. Therefore, the dust can be efficiently transferred by the air blown by the indoor fan (21).

Further, the protrusion (52d) is configured such that the angle formed between the body (52a) and the base portion of the protrusion (52d) on the cleaning brush (52) side is an obtuse angle (that is, the base portion of the protrusion (52d) on the brush portion (52b) side is located closer to the brush portion (52b) than the protrusion end of the protrusion (52d)). Therefore, it is possible to prevent dust from accumulating at the brush portion (52b) side of the protrusion (52d). In other words, although the dust adhering to the edge portion of the brush portion (51b) of the rotating brush (51) moves along the rotational direction of the rotating brush (51) toward the protrusion (52d) of the cleaning brush (52), the dust can pass over the protrusion (52d) without accumulating at the brush portion (52b) side of the protrusion (52d) because the angle formed between the body (52a) and the base portion of the protrusion (52d) on the brush portion (52b) side is an obtuse angle as described above.

Further, the body (52a) of the cleaning brush (52) is elastically supported on the dust storage container (60) by the spring member (52c). Thus, even if the adhesion preventing protrusion (51d) of the rotating brush (51) comes in contact with the protrusion (52d) of the cleaning brush (52), the shock can be absorbed. As a result, it is possible to prevent damage to the rotating brush (51) and the cleaning brush (52), and rotation of the rotating brush (51) is not inhibited.

### «Other Embodiments»

The following structures may be used in the above embodiment.

In the above embodiment, the adhesion preventing protrusion (51d) is provided on the outer peripheral surface of the shaft (51a) of the rotating brush (51). However, the structure is not limited to this structure, and a recess may be formed which has a depth deep enough to cover the edge portion of the brush portion (51b) placed on the outer peripheral surface of the shaft. In this case, too, of the side surfaces forming the recess, the surface which covers the edge portion of the brush portion (51b) is preferably tilted to the brush portion (51b) in a radially outward direction of the shaft.

In the above embodiment, the adhesion preventing protrusion (51d) is provided so as to cover the edge portion of one side of the brush portion (51b) of the rotating brush (51). However, the structure is not limited to this structure, and the adhesion preventing protrusion (51d) may be provided at both edge portions of the brush portion (51b) in the rotational direction.

In the above embodiment, the protrusion (52d) is provided to the cleaning brush (52). However, the structure is not limited to this structure, and the protrusion (52d) may not be provided. In such a case, dust cannot be squeezed between the protrusion (52d) and the adhesion preventing protrusion (51d) of the rotating brush (51). However, the adhesion preventing protrusion (51d) prevents the situation where dust gathering like a band sticks to the rotating brush (51), or dust cannot be easily removed from the rotating brush (51) when the dust is transferred or collected.

In the above embodiment, the dust collecting box (90) is provided to collect the dust removed from the air filter (30). However, the structure is not limited to this structure, and any structure, such as a bag or the like, may be used as long as the dust can be collected in it.

In the above embodiment, the dust collecting box (90) is located in the cleaning unit (100). However, the structure is not limited to this structure, and the dust collecting box (90) may be provided separately from the indoor unit (3).

In the above embodiment, the air blown by the indoor fan (21) is used as a means for transferring dust from the dust storage container (60) to the dust collecting box (90). However, the structure is not limited to this structure, and any structure may be used as long as dust can be transferred. A dedicated fan may be provided.

In the above embodiment, the air filter (30) has a circular shape. However, the shape is not limited to the circular shape, but may be a rectangular shape, for example. In such a case, the air filter (30) and the rotating brush (51) are relatively displaced in a linear manner.

### INDUSTRIAL APPLICABILITY

As described above, the present invention is particularly useful for an indoor unit of an air conditioner in which an air filter is provided at an intake side of an indoor fan.

### DESCRIPTION OF REFERENCE CHARACTERS

- 1: air conditioner
- 3: indoor unit
- 18: main casing (casing)
- 21: indoor fan
- 22: indoor heat exchanger
- 30: air filter
- 45: first sealing member (sealing member)
- 51: rotating brush (dust removal brush)
- 51a: shaft (body)
- 51b: brush portion
- 51d: adhesion preventing protrusion (protrusion)
- 52: cleaning brush
- 52a: body (supporting member)
- 52b: brush portion (removal brush)
- 52d: protrusion (fixed-side protrusion)
- 60: dust storage container (dust case)
- 63: brush opening (opening)
- 90: dust collecting box (dust collecting section)
- 101: chamber casing (casing)

## Claims

1. An indoor unit of an air conditioner, the indoor unit having in a casing (18, 101) an indoor heat exchanger (22), an indoor fan (21) for blowing air taken from a room to a room side, and an air filter (30) located on an intake side of the indoor fan (21), the indoor unit comprising:
a dust removal brush (51) which includes a columnar body (51 a) rotatable about an axis, and a brush portion (51b) provided on part of an outer peripheral surface of the body (51a) along a circumferential direction, the brush portion (51b) coming in contact with the air filter (30) to remove dust captured on the air filter (30), and
a removal brush (52b) which is located to be in contact with the brush portion (51 b) when the dust removal brush (51) is rotated, and which is configured to remove dust adhering to the brush portion (51b), wherein
the body (51 a) of the dust removal brush (51) is configured to cover at least one of both edge portions of the brush portion (51b) in a direction of rotation of the dust removal brush (51), **characterized in that**
a protrusion (51 d) is provided on the outer peripheral surface of the body (51a), the protrusion (51d) covering one of the edge portions of the brush portion (51b) in the direction of rotation of the dust removal brush (51), the one edge portion being located close to the removal brush (52b) when the brush portion (51 b) removes the dust on the air filter (30).

2. The indoor unit of the air conditioner of claim 1, wherein
the body (51a) is configured to cover one of the edge portions of the brush portion (51b) in the direction of rotation of the dust removal brush (51), the one edge portion being located close to the removal brush (52b) when the brush portion (51b) removes the dust on the air filter (30).

3. The indoor unit of the air conditioner of claim 1, wherein
a protrusion end of the protrusion (51d) is located outside a bristle end of the brush portion (51 b) relative to the body (51a).

4. The indoor unit of the air conditioner of claim 1, wherein
a side surface of the protrusion (51 d) facing the brush portion (51b) is tilted to the brush portion (51 b) with decreasing distance from a protrusion end of the protrusion (5 Id).

5. The indoor unit of the air conditioner of claim 1, further comprising:
a dust case (60) configured to accommodate the dust removal brush (51) and the removal brush (52b), wherein
a fixed-side protrusion (52d) is provided in the dust case (60), the fixed-side protrusion (52d) being located opposite to the air filter (30) relative to the removal brush (52b), and protruding close to a locus of a protrusion end of the protrusion (51 d) when the dust removal brush (51) is rotated.

6. The indoor unit of the air conditioner of claim 5, wherein
when viewed from an axis direction of the body (51 a), a base portion of the fixed-side protrusion (52d) on a removal brush (52b) side is closer to the removal brush (52b) than a protrusion end of the fixed-side protrusion (52d).

7. The indoor unit of the air conditioner of claim 5, wherein
when viewed from an axis direction of the body (51a), a base portion of the fixed-side protrusion (52d) opposite to the removal brush (52b) is farther from the removal brush (52b) than a protrusion end of the fixed-side protrusion (52d).

8. The indoor unit of the air conditioner of claim 5, wherein
the dust case (60) is provided with an opening (63) in which the dust removal brush (51) is positioned, and with a supporting member (52a) to a surface of which the removal brush (52b) is attached, and which is elastically supported in the opening (63) to make the removal brush (52b) biased to the dust removal brush (51), and
the fixed-side protrusion (52d) is provided on the same side as the removal brush (52b) of the supporting member (52a).

9. The indoor unit of the air conditioner of claim 5, further comprising:
a dust collecting box (90) configured to collect dust in the dust case (60), and
a dust transfer mechanism (80) configured to transfer the dust in the dust case (60) to the dust collecting box (90) by causing airflow into the dust case (60).

10. The indoor unit of the air conditioner of claim 9, wherein
a sealing member (45) configured to seal a gap between the dust case (60) and the dust removal brush (51) is provided in the dust case (60) opposite to the removal brush (52b) relative to the dust removal brush (51).

11. The indoor unit of the air conditioner of claim 1, wherein
bristles of the dust removal brush (51) and the removal brush (52b) extend toward an interior of the dust case (60) when the dust removal brush (51) and the removal brush (52b) are in contact with each other.

12. A method of cleaning the air filter of the indoor unit of the air conditioner of claim 11, wherein
dust adhering to the brush portion (51 b) adheres to the removal brush (52b) when the dust removal brush (51) is rotated from a position where the brush portion (51 b) comes in contact with the air filter (30) to a position where the brush portion (51b) comes in contact with the removal brush (52b) and thereafter is rotated in the opposite direction and is returned to the position where the brush portion (51b) comes in contact with the air filter (30), and the dust adhering to the removal brush (52b) is scraped off during another rotation of the dust removal brush (51) to the position where the brush portion (51b) comes in contact with the removal brush (52b).

## Patentansprüche

1. Innenraumeinheit einer Klimaanlage, wobei die Innenraumeinheit in einem Gehäuse (18, 101) einen Innenraumwärmetauscher (22), ein Innenraumgebläse (21) zum Blasen von Luft, welche aus einem Raum entnommen wurde zu einer Raumseite und einen Luftfilter (30) aufweist, der auf einer Einlassseite des Innenraumgebläses (21) angeordnet ist, wobei die Innenraumeinheit aufweist;
eine Staubentfernungsbürste (51), die einen säulenförmigen Körper (51a) drehbar um eine Achse und einen Bürstenabschnitt (51b) aufweist, der an einem Teil einer äußeren Umfangsfläche des Körpers (51a) entlang einer Umfangsrichtung vorgesehen ist, wobei der Bürstenabschnitt (51b) mit dem Luftfilter (30) in Kontakt kommt, um von dem Luftfilter (30) eingefangenen Staub zu entfernen, und
eine Entfernungsbürste (52b), die angeordnet ist, um in Kontakt mit dem Bürstenabschnitt (51b) zu sein, wenn die Staubentfernungsbürste (51) gedreht wird, und die ausgestaltet ist, um Staub zu entfernen, der an dem Bürstenabschnitt (51b) anhaftet, wobei
der Körper (51a) der Staubentfernungsbürste (51) ausgestaltet ist, um zumindest einen der beiden Kantenabschnitte des Bürstenabschnitts (51b) in einer Drehrichtung der Staubentfernungsbürste (51) zu bedecken, **dadurch gekennzeichnet, dass**
ein Vorsprung (51d) auf der äußeren Umfangsfläche des Körpers (51a) vorgesehen ist, wobei der Vorsprung (51d) einen der Kantenabschnitte des Bürstenabschnittes (51b) in der Drehrichtung der Staubentfernungsbürste (51) bedeckt, der eine Kantenabschnitt nahe der Entfernungsbürste (52b) angeordnet ist, wenn der Bürstenabschnitt (51b) den Staub auf dem Luftfilter (30) entfernt.

2. Innenraumeinheit einer Klimaanlage nach Anspruch 1, wobei
der Körper (51a) ausgestaltet ist, um einen der Kantenabschnitte des Bürstenabschnitts (51b) in der Drehrichtung der Staubentfernungsbürste (51) zu bedecken, der eine Kantenabschnitt nahe an der Entfernungsbürste (52b) angeordnet ist, wenn der Bürstenabschnitt (51b) den Staub auf dem Luftfilter (30) entfernt.

3. Innenraumeinheit einer Klimaanlage nach Anspruch 1, wobei
ein Vorsprungsende des Vorsprungs (51d) außerhalb eines Borstenendes des Bürstenabschnittes (51b) relativ zu dem Körper (51a) angeordnet ist.

4. Innenraumeinheit einer Klimaanlage nach Anspruch 1, wobei
eine Seitenfläche des Vorsprungs (51d), welche dem Bürstenabschnitt (51b) zugewandt ist, mit abnehmendem Abstand von einem Vorsprungsende des Vorsprungs (51d) zu dem Bürstenabschnitt (51b) geneigt ist.

5. Innenraumeinheit einer Klimaanlage nach Anspruch 1, ferner mit:
einem Staubgehäuse (60), das ausgestaltet ist, um die Staubentfernungsbürste (51) und die Entfernungsbürste (52b) darin aufzunehmen, wobei
ein seitenfester Vorsprung (52d) in dem Staubgehäuse (60) vorgesehen ist, der seitenfeste Vorsprung (52d) gegenüber dem Luftfilter (30) relativ zu der Entfernungsbürste (52b) angeordnet ist, und nahe zu einer Ortslinie eines Vorsprungsendes des Vorsprungs (51d) hervorsteht, wenn die Staubentfernungsbürste (51) gedreht wird.

6. Innenraumeinheit einer Klimaanlage nach Anspruch 5, wobei
wenn von einer Axialrichtung des Körpers (51a) betrachtet, ein Basisabschnitt des seitenfesten Vorsprungs (52d) auf einer Seite der Entfernungsbürste (52b) näher zu der Entfernungsbürste (52b) liegt als ein Vorsprungsende des seitenfesten Vorsprungs (52d).

7. Innenraumeinheit einer Klimaanlage nach Anspruch 5, wobei
wenn aus einer Axialrichtung des Körpers (51a) betrachtet, ein Basisabschnitt des seitenfesten Vorsprungs (52d) gegenüber der Entfernungsbürste (52b) weiter entfernt ist von der Entfernungsbürste (52b) als ein Vorsprungsende des seitenfesten Vorsprungs (52d).

8. Innenraumeinheit einer Klimaanlage nach Anspruch 5, wobei
das Staubgehäuse (60) mit einer Öffnung (63) in welcher die Staubentfernungsbürste (51) positioniert ist und mit einem Halteelement (52a) versehen ist, an dessen Oberfläche die Entfernungsbürste (52b) angebracht ist, und welche elastisch in der Öffnung (63) gehalten ist, um die Entfernungsbürste (52b) zu der Staubentfernungsbürste (51) zu beaufschlagen und
der seitenfeste Vorsprung (52d) auf der gleichen Seite vorgesehen ist wie die Entfernungsbürste (52b) des Halteelements (52a).

9. Innenraumeinheit einer Klimaanlage nach Anspruch 5, ferner mit:
einer Staubsammelbox (90), die ausgestaltet ist Staub in dem Staubgehäuse (60) zu sammeln und
einem Staubtransfermechanismus (80), der ausgestaltet ist, den Staub in dem Staubgehäuse (60) zu der Staubsammelbox (90) durch Bewirken einer Luftströmung in dem Staubgehäuse (60) zu transferieren.

10. Innenraumeinheit einer Klimaanlage nach Anspruch 9, wobei
ein Dichtungselement (45) ausgestaltet ist, um einen Spalt zwischen dem Staubgehäuse (60) und der Staubentfernungsbürste (51) zu versiegeln, in dem Staubgehäuse (60) gegenüber der Entfernungsbürste (52b) relativ zu der Staubentfernungsbürste (51) vorgesehen ist.

11. Innenraumeinheit einer Klimaanlage nach Anspruch 1, wobei
sich Borsten der Staubentfernungsbürste (51) und der Entfernungsbürste (52b) zu einem Inneren des Staubgehäuses (60) hin erstrecken, wenn die Staubentfernungsbürste (51) und die Entfernungsbürste (52b) miteinander in Kontakt stehen.

12. Verfahren zum Reinigen des Luftfilters der Innenraumeinheit einer Klimaanlage nach Anspruch 11, wobei
Staub, der an dem Bürstenabschnitt (51b) haftet an der Entfernungsbürste (52b) haftet, wenn die Staubentfernungsbürste (51) von einer Position an welcher der Bürstenabschnitt (51b) mit dem Filter (30) in Kontakt kommt zu einer Position gedreht wird an welcher der Bürstenabschnitt (51b) in Kontakt mit der Entfernungsbürste (52b) kommt und danach in die entgegengesetzte Richtung gedreht wird und zurückkehrt zu der Position an welcher der Bürstenabschnitt (51b) mit dem Luftfilter (30) in Kontakt kommt und der Staub, der an der Entfernungsbürste (52b) haftet während einer weiteren Drehung der Staubentfernungsbürste (51) zu der Position, an welcher der Bürstenabschnitt (51b) in Kontakt mit der Entfernungsbürste (52b) kommt, abgetragen wird.

## Revendications

1. Unité intérieure d'un conditionneur d'air, l'unité intérieure ayant dans une enveloppe (18, 101) un échangeur de chaleur intérieur (22), un ventilateur intérieur (21) pour souffler de l'air prélevé d'une pièce vers un côté de la pièce, et un filtre à air (30) situé sur un côté d'admission du ventilateur intérieur (21), l'unité intérieure comprenant :
une brosse de retrait de poussière (51) qui comporte un corps colonnaire (51a) rotatif autour d'un axe, et une partie de brosse (51b) aménagée sur une partie d'une surface périphérique externe du corps (51a) le long d'une direction circonférentielle, la partie de brosse (51b) venant en contact avec le filtre à air (30) pour retirer de la poussière capturée sur le filtre à air (30), et
une brosse de retrait (52b) qui est située pour être en contact avec la partie de brosse (51b) lorsque la brosse de retrait de poussière (51) est soumise à une rotation, et qui est configurée pour retirer la poussière adhérant à la partie de brosse (51b), dans laquelle :
le corps (51a) de la brosse de retrait de poussière (51) est configuré pour recouvrir au moins l'une des deux parties de bord de la partie de brosse (51b) dans le sens de rotation de la brosse de retrait de poussière (51),
**caractérisée en ce que** :
une saillie (51d) est aménagée sur la surface périphérique externe du corps (51a), la saillie (51d) recouvrant l'une des parties de bord de la partie de brosse (51b) dans le sens de rotation de la brosse de retrait de poussière (51), la partie de bord en question étant située à proximité de la brosse de retrait (52b) lorsque la partie de brosse (51b) retire la poussière sur le filtre à air (30).

2. Unité intérieure du conditionneur d'air selon la revendication 1, dans laquelle :
le corps (51a) est configuré pour recouvrir l'une des parties de bord de la partie de brosse (51b) dans le sens de rotation de la brosse de retrait de poussière (51), la partie de bord en question étant située à proximité de la brosse de retrait (52b) lorsque la partie de brosse (51b) retire la poussière sur le filtre à air (30).

3. Unité intérieure du conditionneur d'air selon la revendication 1, dans laquelle :
une extrémité de saillie de la saillie (51d) est située à l'extérieur d'une extrémité de poils de la partie de brosse (51b) par rapport au corps (51a).

4. Unité intérieure du conditionneur d'air selon la revendication 1, dans laquelle :
une surface latérale de la saillie (51d) faisant face à la partie de brosse (51b) est inclinée vers la partie de brosse (51b) à une distance décroissante d'une extrémité de saillie de la saillie (51d).

5. Unité intérieure du conditionneur d'air selon la revendication 1, comprenant en outre :
une boîte à poussière (60) configurée pour recevoir la brosse de retrait de poussière (51) et la brosse de retrait (52b), dans laquelle :
une saillie côté fixe (52d) est aménagée dans la boîte à poussière (60), la saillie côté fixe (52d) étant située à l'opposé du filtre à air (30) par rapport à la brosse de retrait (52b), et faisant saillie à proximité d'un emplacement d'une extrémité de saillie de la saillie (51d) lorsque la brosse de retrait de poussière (51) est soumise à une rotation.

6. Unité intérieure du conditionneur d'air selon la revendication 5, dans laquelle :
en observant depuis une direction axiale du corps (51a), une partie de base de la saillie côté fixe (52d) sur un côté de la brosse de retrait (52b) est plus proche de la brosse de retrait (52b) qu'une extrémité de saillie de la saillie côté fixe (52d).

7. Unité intérieure du conditionneur d'air selon la revendication 5, dans laquelle :
en observant depuis une direction axiale du corps (51a), une partie de base de la saillie côté fixe (52d) opposée à la brosse de retrait (52b) est plus éloignée de la brosse de retrait (52b) qu'une extrémité de saillie de la saillie côté fixe (52d).

8. Unité intérieure du conditionneur d'air selon la revendication 5, dans laquelle :
la boîte à poussière (60) est pourvue d'une ouverture (63) dans laquelle la brosse de retrait de poussière (51) est positionnée, et d'un élément de support (52a) à une surface duquel la brosse de retrait (52b) est fixée, et qui est supporté de manière élastique dans l'ouverture (63) afin que la brosse de retrait (52b) soit pressée vers la brosse de retrait de poussière (51), et
la saillie côté fixe (52d) est aménagée sur le même côté que la brosse de retrait (52b) de l'élément de support (52a).

9. Unité intérieure du conditionneur d'air selon la revendication 5, comprenant en outre :
une boîte collectrice de poussière (90) configurée pour collecter de la poussière dans la boîte à poussière (60), et
un mécanisme de transfert de poussière (80) configuré pour transférer la poussière dans la boîte à poussière (60) à la boîte collectrice de poussière (90) en provoquant un écoulement d'air dans la boîte à poussière (60).

10. Unité intérieure du conditionneur d'air selon la revendication 9, dans laquelle :
un élément d'étanchéité (45) configuré pour étanchéifier un intervalle entre la boîte à poussière (60) et la brosse de retrait de poussière (51) est aménagé dans la boîte à poussière (60) opposé à la brosse de retrait (52b) par rapport à la brosse de retrait de poussière (51).

11. Unité intérieure du conditionneur d'air selon la revendication 1, dans laquelle :
les poils de la brosse de retrait de poussière (51) et de la brosse de retrait (52b) s'étendent vers un intérieur de la boîte à poussière (60) lorsque la brosse de retrait de poussière (51) et la brosse de retrait (52b) sont en contact l'une avec l'autre.

12. Procédé de nettoyage du filtre à air de l'unité intérieure du conditionneur d'air selon la revendication 11, dans lequel :
de la poussière adhérant à la partie de brosse (51b) adhère à la brosse de retrait (52b) lorsque la brosse de retrait de poussière (51) est soumise à une rotation d'une position où la partie de brosse (51b) vient en contact avec le filtre à air (30) à une position où la partie de brosse (51b) vient en contact avec la brosse de retrait (52b), et est soumise ensuite à une rotation dans le sens opposé et est renvoyée à la position où la partie de brosse (51b) vient en contact avec le filtre à air (30), et la poussière'adhérant à la brosse de retrait (52b) est détachée par raclage au cours d'une autre rotation de la brosse de retrait de poussière (51) jusqu'à la position où la partie de brosse (51b) vient en contact avec la brosse de retrait (52b).
